# EUROPÄISCHE PATENTSCHRIFT

(11) **EP 3 715 096 B1**
(45) Veröffentlichungstag und Bekanntmachung des Hinweises auf die Patenterteilung: **14.06.2023**
(21) Anmeldenummer: 20164307.9
(22) Anmeldetag: 19.03.2020
(51) Int. Cl.: B29C 65/18, B29C 65/24

(54) **SCHWEISSROLLENEINRICHTUNG, SYSTEM UND VERFAHREN ZUM ERZEUGEN EINER LUFTPOLSTERFOLIE**
WELDING ROLLER DEVICE, SYSTEM AND METHOD FOR CREATING AN AIR CUSHION FILM
DISPOSITIF DE MOLETTE DE SCELLAGE À CHAUD, SYSTÈME ET PROCÉDÉ DE FABRICATION D'UN FILM À BULLES D'AIR

(30) Priorität: 29.03.2019 DE 102019108245
(43) Veröffentlichungstag der Anmeldung: 30.09.2020
(73) Patentinhaber: Beck Packautomaten GmbH & Co. KG, 72636 Frickenhausen (DE)
(72) Erfinder: Schumayer, Ulrich, 72622 Nürtingen (DE)
(74) Vertreter: Witte, Weller & Partner Patentanwälte mbB

(56) Entgegenhaltungen:
- DE-U- 6 752 876
- FR-A1- 2 257 501
- JP-B1- S4 812 279

## Beschreibung

Die vorliegende Erfindung betrifft eine Schweißrolleneinrichtung, ein System und ein Verfahren zum Erzeugen einer Luftpolsterfolie aus zwei aufeinanderliegenden Folienbahnen im Durchlaufbetrieb.

Unter dem Begriff "Luftpolsterfolie" versteht man im Allgemeinen eine Folienanordnung die zur Polsterung, beispielsweise zur Polsterung von Verpackungsgüter, geeignet ist. In der Regel bestehen derartige Luftpolsterfolien aus mindestens zwei Folienschichten. Die Folienschichten sind miteinander verbunden, insbesondere miteinander verklebt oder verschweißt. Zwischen diesen Folienschichten sind Luftkammern bzw. Lufteinschlüsse angeordnet, die die Polsterung ausbilden. Diese Luftkammern können entweder als Noppen bzw. Blasen oder als Luftschläuche bzw. Luftkissen ausgebildet sein.

Unter anderem können Luftpolsterfolien in Folienverpackungsmaschinen dazu verwendet werden, Folienumverpackungen für alle Arten von Verpackungsgütern zu erzeugen. Beispielsweise werden Datenträger wie DVDs oder CDs regelmäßig in Folie verpackt vertrieben. Aber auch Zeitungen mit Beilegern, Bücher, Ersatzteile oder alle Arten von in Supermärkten vertriebenen Artikeln werden für gewöhnlich mit einer Folienumverpackung versehen. Die Verwendung von Luftpolsterfolien bei derartigen Verpackungsgütern hat den Vorteil, dass die Verpackungsgüter stoßunempfindlich verpackt werden können. Dadurch kann ein sicherer Transport der Verpackungsgüter gewährleistet werden.

Systeme und Verfahren zum Erzeugen solcher Luftpolsterfolien sind im Stand der Technik allgemein bekannt.

Beispielsweise zeigt die Druckschrift EP 1 477 299 A1 ein Verfahren zur Herstellung einer Polypropylen-Luftblasenfolie. Die Polypropylen-Luftblasenfolie umfasst eine erste und eine zweite Folienkomponente. Die erste Folienkomponente wird mittels eines Formzylinders unter Vakuum thermogeformt, um zylindrische oder konische Vertiefungen zu erzeugen. Die zweite Folienkomponente ist flach und wird auf die erste Folie mittels eines Schweißzylinders aufgeschweißt.

Des Weiteren zeigt die Druckschrift DE 199 13 408 C2, dass bei einem Kunststoffschlauch zur Herstellung gasgefüllter Füllkörper, mit zwei übereinanderliegenden Folien, die an einem ersten ihrer Längsränder gasdicht miteinander verbunden sind, die Oberfolie und die Unterfolie zur Ausbildung aufblasbarer Taschen in Querrichtung durch mit Abstand zueinander angeordnete Paare gasdichter Schweißnähte miteinander verschweißt sind, die sich von dem ersten Längsrand aus bis zu einer vorgegebenen Entfernung von dem gegenüberliegenden, zweiten Längsrand erstrecken. Die Taschen weisen jeweils eine vom zweiten Längsrand aus zugängliche Gas-Einfüllöffnung zwischen der Ober- und der Unterfolie auf, und zwischen den Schweißnähten jedes Schweißnahtpaares ist ein Zwischenraum vorhanden, in dem eine Perforationsnaht ausgebildet ist, die sich vom ersten bis zum zweiten Längsrand erstreckt. Es wird auch ein Verfahren zur Herstellung gasgefüllter Füllkörper unter Verwendung solcher Kunststoffschläuche und eine Vorrichtung zur Durchführung des Verfahrens vorgeschlagen.

Des Weiteren zeigt die Druckschrift JP S48 12279 B1 eine Vorrichtung zur Herstellung eines Polsterelements, die kontinuierlich aus einem Material wie einer Folie oder einer Folie aus Kunstharz oder dergleichen hergestellt werden kann. Insbesondere zeigt dieses Dokument eine Schweißrolleneinrichtung zum Erzeugen einer Luftpolsterfolie aus zwei aufeinanderliegenden Folienbahnen im Durchlaufbetrieb, wobei die Schweißrolleneinrichtung eine Heizeinrichtung aufweist, wobei die Schweißrolleneinrichtung eine Längsachse aufweist, wobei sich die Längsachse in einer Längsrichtung erstreckt, wobei die Schweißrolleneinrichtung um die Längsachse in einer Drehrichtung drehbar gelagert ist, wobei die Schweißrolleneinrichtung eine Mehrzahl von äußeren Stegen aufweist, die sich bezüglich der Längsachse in einer radialen Richtung nach außen hin erstrecken, wobei die äußeren Stege in der Längsrichtung voneinander beabstandet sind, wobei die Außenwelle zwischen jeweils zwei benachbarten, äußeren Stegen jeweils eine äußere Aussparung aufweist.

Des Weiteren zeigt die Druckschrift FR 2 257 501 A1, dass ein Verpackungsmaterial hergestellt wird, indem zwei Schichten einer thermoplastischen Folie mit Luft laminiert werden, die durch ein Gittermuster aus Schweißnähten eingeschlossen wird, wobei Luft unter Druck zwischen Längsschweißnähten eingeführt und durch nachfolgende Erzeugung von Querschweißnähten eingeschlossen wird. Somit kann eine flexible Verpackung hergestellt werden aus z.B. PVC-Folie. Das anschließende Abkühlen der eingeschlossenen Luft erzeugt flexible Kissen. Insbesondere zeigt dieses Dokument ein Verfahren zum Erzeugen einer Luftpolsterfolie aus zwei aufeinanderliegenden Folienbahnen im Durchlaufbetrieb, in dem die beiden Folienbahnen in einer Transportrichtung bewegt werden, wobei das Verfahren die folgenden Schritte aufweist:
- Anordnen zweier Schweißrolleneinrichtungen auf zwei gegenüberliegenden Seiten der Folienbahnen, so dass die Folienbahnen zwischen den Schweißrolleneinrichtungen hindurchlaufen, wobei jede Schweißrolleneinrichtung eine Längsachse aufweist, wobei sich die Längsachse in einer Längsrichtung erstreckt, wobei jede Schweißrolleneinrichtung eine Mehrzahl von äußeren Stegen aufweist, die sich bezüglich der Längsachse in einer radialen Richtung nach außen hin erstrecken, wobei die äußeren Stege in der Längsrichtung voneinander beabstandet sind, wobei jede Schweißrolleneinrichtung zwischen jeweils zwei benachbarten, äußeren Stegen jeweils eine äußere Aussparung aufweist, wobei die Längsachsen der beiden Schweißrolleneinrichtungen parallel zueinander und senkrecht zu der Transportrichtung angeordnet sind, wobei die äußeren Stege der Schweißrolleneinrichtungen und je zwei äußere Aussparungen gegenüberliegend zueinander angeordnet sind;
- Anordnen einer Düseneinrichtung zwischen den Folienbahnen;
- Erzeugen eines Luftstroms mittels der Düseneinrichtung zwischen den Folienbahnen in der Transportrichtung;
- Verschweißen der Folienbahnen mittels der Schweißrolleneinrichtungen in der Transportrichtung nur in dem Bereich der äußeren Stege, so dass Schweißnähte in der Transportrichtung erzeugt werden und zwischen den Schweißnähten Folienschläuche ausgebildet werden, die sich in der Transportrichtung erstrecken.

Des Weiteren zeigt die Druckschrift DE 67 52 876 U eine indirekte Beheizung von Siegel- und Schweißwalzen für Kunststoffe aller Art.

Die bekannten Systeme und Verfahren zum Erzeugen von Luftpolsterfolien lassen noch Raum für Verbesserungen.

Es ist daher eine Aufgabe der vorliegenden Erfindung, eine verbesserte Vorrichtung, ein verbessertes System und ein verbessertes Verfahren zum Erzeugen einer Luftpolsterfolie vorzusehen, wobei die Luftpolsterfolie im Durchlaufbetrieb erzeugt werden kann.

Des Weiteren ist eine Aufgabe der vorliegenden Erfindung, eine verbesserte Vorrichtung, ein verbessertes System und ein verbessertes Verfahren zum Erzeugen einer Luftpolsterfolie vorzusehen, welche einfacher und kompakter ausgestaltet sind.

Gemäß einem ersten Aspekt der vorliegenden Erfindung wird eine Schweißrolleneinrichtung zum Erzeugen einer Luftpolsterfolie aus zwei aufeinanderliegenden Folienbahnen im Durchlaufbetrieb vorgeschlagen, wobei die Schweißrolleneinrichtung eine Innenwelle, eine um die Innenwelle angeordnete Außenwelle und eine Heizeinrichtung zum Beheizen der Innenwelle aufweist, wobei die Außenwelle und die Innenwelle eine gemeinsame Längsachse aufweisen, wobei sich die Längsachse in einer Längsrichtung erstreckt, wobei die Innenwelle feststehend angeordnet ist, wobei die Außenwelle um die Längsachse in einer Drehrichtung drehbar gelagert ist, wobei die Außenwelle eine Mehrzahl von äußeren Stegen aufweist, die sich bezüglich der Längsachse in einer radialen Richtung nach außen hin erstrecken, wobei die äußeren Stege in der Längsrichtung voneinander beabstandet sind, wobei die Außenwelle zwischen jeweils zwei benachbarten, äußeren Stegen jeweils eine äußere Aussparung aufweist, und wobei die Innenwelle derart ausgebildet ist, dass ein Wärmetransfer zwischen der Innenwelle und der Außenwelle in einem Bereich der äußeren Stege größer ist als in einem Bereich der äußeren Aussparungen.

Gemäß einem zweiten Aspekt der vorliegenden Erfindung wird ein System zum Erzeugen einer Luftpolsterfolie aus zwei aufeinanderliegenden Folienbahnen im Durchlaufbetrieb vorgeschlagen, in dem die beiden Folienbahnen in einer Transportrichtung bewegt werden, wobei das System eine Schweißrolleneinrichtung gemäß dem ersten Aspekt der Erfindung und eine Düseneinrichtung zum Erzeugen eines Luftstroms zwischen den Folienbahnen in der Transportrichtung aufweist, wobei die Längsachse senkrecht zu der Transportrichtung angeordnet ist, und wobei die Düseneinrichtung zwischen den Folienbahnen angeordnet ist.

Gemäß einem dritten Aspekt der vorliegenden Erfindung wird ein Verfahren zum Erzeugen einer Luftpolsterfolie aus zwei aufeinanderliegenden Folienbahnen im Durchlaufbetrieb vorgeschlagen, in dem die beiden Folienbahnen in einer Transportrichtung bewegt werden, wobei das Verfahren die folgenden Schritte aufweist:
- Anordnen zweier Schweißrolleneinrichtungen auf zwei gegenüberliegenden Seiten der Folienbahnen, so dass die Folienbahnen zwischen den Schweißrolleneinrichtungen hindurchlaufen, wobei jede Schweißrolleneinrichtung eine Innenwelle, eine um die Innenwelle angeordnete Außenwelle und eine Heizeinrichtung zum Beheizen der Innenwelle aufweist, wobei die Außenwelle und die Innenwelle eine gemeinsame Längsachse aufweisen, wobei sich die Längsachse in einer Längsrichtung erstreckt, wobei die Innenwelle feststehend angeordnet ist, wobei die Außenwelle um die Längsachse in einer Drehrichtung drehbar gelagert ist, wobei die Au-βenwelle eine Mehrzahl von äußeren Stegen aufweist, die sich bezüglich der Längsachse in einer radialen Richtung nach außen hin erstrecken, wobei die äu-ßeren Stege in der Längsrichtung voneinander beabstandet sind, wobei die Au-βenwelle zwischen jeweils zwei benachbarten, äußeren Stegen jeweils eine äußere Aussparung aufweist, und wobei die Innenwelle derart ausgebildet ist, dass ein Wärmetransfer zwischen der Innenwelle und der Außenwelle in einem Bereich der äußeren Stege größer ist als in einem Bereich der äußeren Aussparungen, wobei die Längsachsen der beiden Innenwellen der Schweißrolleneinrichtungen parallel zueinander und senkrecht zu der Transportrichtung angeordnet sind, wobei die äußeren Stege der Schweißrolleneinrichtungen in der Längsrichtung korrespondierend zueinander angeordnet sind, so dass je zwei äußeren Stege und je zwei äu-ßere Aussparungen gegenüberliegend zueinander angeordnet sind;
- Anordnen einer Düseneinrichtung zwischen den Folienbahnen, insbesondere wobei die Düseneinrichtung eine Mehrzahl von Düsen aufweist und die Düsen entlang der Längsrichtung angeordnet werden, so dass jeweils eine Düse in der Transportrichtung korrespondierend, insbesondere fluchtend, mit je zwei gegenüberliegenden äußeren Aussparungen der Schweißrolleneinrichtungen angeordnet ist;
- Erzeugen eines Luftstroms mittels der Düseneinrichtung zwischen den Folienbahnen in der Transportrichtung; und
- Verschweißen der Folienbahnen mittels der Schweißrolleneinrichtungen nur in dem Bereich der äußeren Stege, um die Luftpolsterfolie aus den Folienbahnen zu erzeugen.

Mittels der erfindungsgemäßen Schweißrolleneinrichtungen kann eine Luftpolsterfolie aus zwei aufeinanderliegenden Folienbahnen, allgemein als Oberfolie und Unterfolie bezeichnet, im Durchlaufbetrieb erzeugt werden. Der Begriff "Durchlaufbetrieb" ist dahingehend zu verstehen, dass die Luftpolsterfolie fortlaufend, insbesondere in einem zumindest teilweise kontinuierlichen Betrieb, erzeugt werden. In anderen Worten werden die zwei aufeinanderliegenden Folienbahnen im Betrieb fortlaufend an der Schweißrolleneinrichtung vorbeigeführt, um die Luftpolsterfolie zu erzeugen.

Zum Erzeugen der Luftpolsterfolie ist die Schweißrolleneinrichtung dazu ausgebildet, mittels eines Wärmetransfers auf eine der Folienbahnen die zwei aufeinanderliegenden Folienbahnen miteinander zu verschweißen. Dazu weist die Schweißrolleneinrichtung die Innenwelle, die Außenwelle und die Heizeinrichtung auf. Die zum Verschweißen benötigte Wärme wird von der Heizeinrichtung auf die Innenwelle und von der Innenwelle auf die Außenwelle übertragen. Die Heizeinrichtung kann beispielsweise eine Heizpatrone sein, die vorzugsweise in der Innenwelle angeordnet ist. Vorzugsweise kann die Innenwelle hohl ausgebildet sein, wobei sich die Heizpatronen zumindest teilweise durch die hohle Innenwelle hindurch erstreckt. Die Heizeinrichtung ist vorzugsweise dazu eingerichtet, die Innenwelle zumindest in einem Bereich bezüglich der Längsrichtung zu beheizen, der korrespondierend zu den äußeren Stegen der Außenwelle angeordnet ist.

Die zwei aufeinanderliegenden Folienbahnen werden fortlaufend an der Außenwelle vorbeigeführt und kommen im Betrieb in Kontakt mit der Außenwelle. Die Außenwelle ist derart ausgebildet, dass sie die beiden Folienbahnen nur in dem Bereich der äußeren Stege miteinander verschweißt. In anderen Worten ist die Schweißrolleneinrichtung dazu eingerichtet, mittels der äußeren Stege fortlaufende Schweißnähte in der Durchlaufrichtung der Folienbahnen, sprich der Transportrichtung der Folienbahnen, zu erzeugen. In dem Bereich der äußeren Aussparungen werden die aufeinanderliegenden Folienbahnen jedoch nicht miteinander verschweißt. Dadurch entsteht im Bereich jeder äußeren Aussparung jeweils eine fortlaufende Luftkammer bzw. ein fortlaufender Folienschlauch, wobei die Anzahl der fortlaufenden Folienschläuche der Anzahl der äußeren Aussparungen entspricht.

Die äußeren Stege und äußeren Aussparungen sind vorzugsweise ringförmig ausgebildet und erstrecken sich entlang der Drehrichtung um die Längsachse. Insbesondere können die äußeren Stege und äußeren Aussparungen bezüglich der Längsachse rotationssymmetrisch ausgebildet sein.

Zum Ausbilden bzw. Formen der Folienschläuche ist vorzugsweise die Düseneinrichtung vorgesehen. Die Düseneinrichtung erzeugt einen kontinuierlichen Luftstrom zwischen den Folienbahnen in der Transportrichtung. In anderen Worten bläst die Düseneinrichtung Luft in die Folienschläuche ein, um diese im Betrieb mit Luft zu füllen, wodurch die beiden Folienbahnen im Betrieb in dem Bereichen zwischen den erzeugten Schweißnähten voneinander beabstandet werden. Dazu kann beispielsweise die Düseneinrichtung eine Mehrzahl von Düsen aufweisen, die entlang der Längsrichtung angeordnet, so dass jeweils eine Düse in der Transportrichtung korrespondierend, insbesondere fluchtend, mit jeweils einer äußeren Aussparung der Schweißrolleneinrichtung angeordnet ist. Dadurch ist jede Düse auch fluchtend mit jeweils einem Folienschlauch angeordnet, so dass jede Düse Luft in den entsprechenden Folienschlauch einbläst.

Im Betrieb zum Erzeugen der Luftpolsterfolie erstreckt sich somit die der Schweißrolleneinrichtung zugewandte Folienbahn in die Aussparungen hinein, da die Folienbahnen im Bereich zwischen den Schweißnähten, also entsprechend auch in dem Bereich der äußeren Aussparungen, voneinander beabstandet werden. Um nun zu vermeiden, dass die der Schweißrolleneinrichtung zugewandte Folienbahnen, die sich die Aussparung hinein erstreckt, am Boden der Aussparungen anhaftet, insbesondere angeklebt, ist die Innenwelle derart ausgebildet, dass ein Wärmetransfer zwischen der Innenwelle und der Außenwelle in einem Bereich der äußeren Stege größer ist als in einem Bereich der äußeren Aussparungen. Dies wird beispielsweise dadurch erreicht, dass ein Abstand der Innenwelle zu der Außenwelle in dem Bereich der äußeren Stege kleiner ist als in einem Bereich der äußeren Aussparungen. In anderen Worten wird dadurch erreicht, dass die Außenwelle im Bereich der äußeren Stege wärmer ist als im Bereich der äußeren Aussparungen, insbesondere wärmer als am Boden der äußeren Aussparungen.

Mittels der erfindungsgemäßen Schweißrolleneinrichtung kann somit eine Luftpolsterfolie mit fortlaufenden Folienschläuchen, die nebeneinander angeordnet sind, im Durchlaufbetrieb erzeugt werden.

Als Material für die Folienbahnen kann jedes Folienmaterial verwendet werden, dass sich zum Verschweißen von Folienbahnen eignet. Es ist somit also nicht erforderlich, dass ein spezielles, beispielsweise ein thermoplastisch verformbares, Folienmaterial verwendet werden muss.

Des Weiteren ist der erfindungsgemäße Aufbau einfacher und kompakter, insbesondere platzsparende, als bekannte Vorrichtungen zum Erzeugen von Luftpolsterfolie, die beispielsweise Folienschläuche quer zu der Durchlaufrichtung bzw. Transportrichtung der Folienbahnen erzeugen.

Die eingangs gestellte Aufgabe wird somit vollumfänglich gelöst.

In einer ersten Ausgestaltung der vorliegenden Erfindung kann vorgesehen sein, dass ein radialer Abstand zwischen der Innenwelle und der Außenwelle in dem Bereich der äußeren Stege kleiner ist als in dem Bereich der äußeren Aussparungen.

Dadurch wird erreicht, dass der Wärmetransfer zwischen der Innenwelle und der Außenwelle in einem Bereich der äußeren Stege größer ist als in einem Bereich der äußeren Aussparungen. In anderen Worten, sind das Außenprofil der Innenwelle und das Innenprofil der Außenwelle derart ausgebildet, um den bestimmten radialen Abstand zu erzeugen.

In einer weiteren Ausgestaltung der vorliegenden Erfindung kann vorgesehen sein, dass die Innenwelle eine Mehrzahl von inneren Stegen aufweist, die sich bezüglich der Längsachse in der radialen Richtung in Richtung der Außenwelle hin erstrecken, wobei die inneren Stege in der Längsrichtung voneinander beabstandet sind, und wobei die inneren Stege in der Längsrichtung derart angeordnet sind, dass jeweils ein innerer Steg korrespondierend, insbesondere radial fluchtend, zu jeweils einem äußeren Steg angeordnet ist.

Auf diese Weise wird ein einfacher Wärmetransfer von den inneren Stegen auf die äußeren Stege ermöglicht.

In einer weiteren Ausgestaltung der vorliegenden Erfindung kann vorgesehen sein, dass die Innenwelle zwischen jeweils zwei benachbarten, inneren Stegen jeweils eine innere Aussparung aufweist, wobei ein radialer Abstand der inneren Stege zu der Außenwelle kleiner ist als ein radialer Abstand der inneren Aussparungen, insbesondere eines Bodens der inneren Aussparungen, zu der Außenwelle.

Auf diese Weise ist die Innenwelle derart ausgestaltet, dass auch der radiale Abstand zwischen der Innenwelle und der Außenwelle in dem Bereich der äußeren Stege kleiner ist als in dem Bereich der äußeren Aussparungen, so dass der Wärmetransfer zwischen der Innenwelle und der Außenwelle in einem Bereich der äußeren Stege größer ist als in einem Bereich der äußeren Aussparungen.

In einer weiteren Ausgestaltung der vorliegenden Erfindung kann vorgesehen sein, dass der radialer Abstand der inneren Stege zu der Außenwelle kleiner ist als 0,5 µm, wobei der radiale Abstand vorzugsweise 0,05 µm bis 0,5 µm, insbesondere 0,1 µm beträgt.

Auf diese Weise wird ein Abstand zwischen den inneren Stegen und der Außenwelle erreicht, der einen hohen Wärmetransfer ermöglicht.

In einer weiteren Ausgestaltung der vorliegenden Erfindung kann vorgesehen sein, dass der radialer Abstand der inneren Aussparungen, insbesondere eines Bodens der inneren Aussparungen, zu der Außenwelle größer ist als 0,5 mm, vorzugsweise 0,5 mm bis 1 cm, insbesondere 3 mm.

Auf diese Weise wird ein Abstand zwischen den inneren Aussparungen, insbesondere einem Boden der inneren Aussparungen, und der Außenwelle erreicht, der nur einen minimalen, vernachlässigbaren Wärmetransfer zulässt.

In einer weiteren Ausgestaltung der vorliegenden Erfindung kann vorgesehen sein, dass sich jeder äußere Steg nach radial außen hin verjüngt.

Da die Folienbahnen nur durch einen Wärmeübertrag am radial äußeren Ende jedes äußeren Stegs verschweißt werden, ist dementsprechend auch die Temperatur am radial äußeren Ende jedes äußeren Stegs ausschlaggebend dafür, wie hoch dieser Wärmeübertrag zum Verschweißen ist. Weisen die äußeren Stege eine gleichbleibende Dicke auf, so sinkt die Temperatur beim Heizen von dem radial inneren Ende zu dem radial äußeren Ende der Stege ab. Durch die Verjüngung der Stege nach radial außen hin wird erreicht, dass die Temperatur der Stege von dem radial inneren Ende hin zu dem radial äußeren Ende der Stege nicht bzw. weniger stark absinkt. Dadurch wird ein effizienterer Wärmetransfer erreicht. Des Weiteren wird durch diese Ausbildung der äußeren Stege die Stabilität der äußeren Stege erhöht.

In einer weiteren Ausgestaltung der vorliegenden Erfindung kann vorgesehen sein, dass jeder äußere Steg einen ersten Bereich mit einer ersten Erstreckung in der Längsrichtung und einen zweiten Bereich mit einer zweiten Erstreckung in der Längsrichtung aufweist, wobei der zweite Bereich radial weiter außen von dem ersten Bereich angeordnet ist, und wobei die zweite Erstreckung kleiner ist als die erste Erstreckung.

In anderen Worten verjüngen sich die äußeren Stege in dieser Ausgestaltung nach radial außen hin, wodurch, wie zuvor beschrieben, ein effizienterer Wärmetransfer erreicht wird.

In einer weiteren Ausgestaltung der vorliegenden Erfindung kann vorgesehen sein, dass die äußeren Stege in der Längsrichtung aufeinanderfolgend mit demselben Versatz angeordnet sind, wobei ein Versatz benachbarter Stege 0,1 cm bis 3 cm, insbesondere 0,8 cm, beträgt.

Durch einen gleichbleibenden Versatz der Stege wird ein gleichbleibender Abstand zwischen benachbarten Schweißnähten der Luftpolsterfolie erreicht. Auf diese Weise ist die Luftpolsterfolie möglichst gleichförmig ausgestaltet, so dass auch die Polsterung über die gesamte Fläche der Luftpolsterfolie im Wesentlichen gleich ist.

In einer weiteren Ausgestaltung der vorliegenden Erfindung kann vorgesehen sein, dass die äußeren Stege an einem radial äußeren Ende in der Längsrichtung jeweils eine Erstreckung aufweisen, die 0,5 mm bis 1 cm, insbesondere 3 mm, beträgt.

In anderen Worten ist diese Erstreckung die Dicke der äußeren Stege in der Längsrichtung. Die Dicke der äußeren Stege an dem radial äußersten Ende entspricht wiederum auch der Breite der Kontaktfläche mit der der Schweißrolleneinrichtung zugewandten Folienbahn und damit auch der Breite der zu erzeugenden Schweißnaht.

In einer weiteren Ausgestaltung der vorliegenden Erfindung kann vorgesehen sein, dass die Schweißrolleneinrichtung des Weiteren zwei Lagerungseinrichtungen zum Lagern der Außenwelle auf der Innenwelle, insbesondere wobei die Lagerungseinrichtungen jeweils an einem axialen Ende der Außenwelle angeordnet sind, und wobei sich die Innenwelle in der Längsrichtung mindestens jeweils bis zu dem axialen Ende der Außenwelle hin erstreckt.

Dadurch ist die Außenwelle auf einfache Art und Weise auf der feststehenden Innenwelle in der Drehrichtung drehbar gelagert.

In einer weiteren Ausgestaltung der vorliegenden Erfindung kann vorgesehen sein, dass die Außenwelle zwei äußerste Aussparungen aufweist, die bezüglich der Längsrichtung auf gegenüberliegenden Seiten der äußeren Stege der Außenwelle angeordnet sind, wobei sich die äußersten Aussparungen der Außenwelle in der Längsrichtung von den äußeren Stegen weg erstrecken.

Auf diese Weise wird erreicht, dass der Umfangsbereich der Außenwelle, der sich in der Längsrichtung an die äußersten der äußeren Stege anschließt, von den äußeren Stegen thermisch isoliert ist, sodass in diesem Bereich kein Wärmeübertrag und somit auch kein Verschweißen stattfinden kann.

In einer weiteren Ausgestaltung der vorliegenden Erfindung kann vorgesehen sein, dass die Innenwelle zwei äußerste Aussparungen aufweist, die bezüglich der Längsrichtung auf gegenüberliegenden Seiten der inneren Stege der Innenwelle angeordnet sind, wobei sich die äußersten Aussparungen der Innenwelle in der Längsrichtung von den inneren Stegen weg erstrecken.

Auf diese Weise wird erreicht, dass der Umfangsbereich der Innenwelle, der sich in der Längsrichtung an die äußersten der inneren Stege anschließt, von der Außenwelle weiter beabstandet ist als die inneren Stege, sodass in diesem Bereich kein bzw. nur ein geringer Wärmetransfer auf die Außenwelle stattfinden kann.

In einer weiteren Ausgestaltung der vorliegenden Erfindung kann vorgesehen sein, dass die Düseneinrichtung eine Mehrzahl von Düsen aufweist, wobei die Düsen in der Längsrichtung derart angeordnet sind, dass jeweils eine Düse in der Transportrichtung korrespondierend, insbesondere fluchtend, mit jeweils einer äußeren Aussparung der Schweißrolleneinrichtung angeordnet ist, insbesondere wobei sich jede Düse im Betrieb zumindest teilweise in die entsprechende Aussparung hinein oder durch die entsprechende Aussparung hindurch erstreckt.

In anderen Worten sind die Düsen somit entlang der Längsrichtung derart angeordnet bzw. verteilt, dass jeweils eine Düse in der Transportrichtung fluchtend mit jeweils einer äußeren Aussparung der Schweißrolleneinrichtung angeordnet ist. In anderen Worten bläst jede Düse Luft in Richtung der entsprechend fluchtenden Aussparung. Dadurch ist jede Düse auch fluchtend mit jeweils einem entsprechenden Folienschlauch angeordnet, der in den Aussparungen erzeugt wird, so dass jede Düse Luft in den entsprechenden Folienschlauch einbläst.

In einer weiteren Ausgestaltung der vorliegenden Erfindung kann vorgesehen sein, dass jede Düse senkrecht zu der Transportrichtung ein Querschnittsprofil aufweist, das so ausgebildet ist, dass ein Abstand der Folienbahnen in einem Bereich jeder Düse vergrö-ßert wird.

Die Düsen der Düseneinrichtung sind bezüglich der Transportrichtung stromaufwärts von der Schweißrolleneinrichtung und zwischen den beiden Folienbahnen angeordnet. Dabei ist das Querschnittsprofil der Düsen senkrecht zu der Transportrichtung so ausgebildet, dass es sich zumindest teilweise durch die beiden Ebenen, in der die beiden Folienbahnen verlaufen, hindurch erstreckt. Im Durchlaufbetrieb laufen die Folienbahnen somit über das Querschnittsprofil der Düsen und werden entsprechend dem Querschnittsprofil der Düsen vorgeformt. Insbesondere wird durch das Vorformen mittels des Querschnittsprofil der Düsen erreicht, dass die Folienbahnen in dem Bereich der äußeren Aussparungen weiter voneinander beabstandet sind als in dem Bereich der äußeren Stege.

In einer weiteren Ausgestaltung der vorliegenden Erfindung kann vorgesehen sein, dass das System zwei Schweißrolleneinrichtungen aufweist, wobei die Schweißrolleneinrichtungen auf gegenüberliegenden Seiten der Folienbahnen angeordnet sind, so dass die Folienbahnen zwischen den Schweißrolleneinrichtungen in der Transportrichtung hindurchlaufen, wobei die Längsachsen der beiden Innenwellen der Schweißrolleneinrichtungen parallel zueinander und senkrecht zu der Transportrichtung angeordnet sind, wobei jeweils zwei äußere Stege der Schweißrolleneinrichtungen gegenüberliegend zueinander angeordnet sind, insbesondere so dass sie die Folienbahnen zwischen sich verschweißen.

Durch die Verwendung von zwei Schweißrolleneinrichtungen wird ein gleichmäßiger Wärmeübertrag von beiden Seiten der Folienbahnen ermöglicht. Die Qualität der Schweißnähte wird somit verbessert. Des Weiteren können sich in dieser Ausgestaltung die Folienschläuche der Luftpolsterfolie sowohl in die äußeren Aussparungen der ersten Schweißrolleneinrichtung als auch in die äußeren Aussparungen der zweiten Schweißrolleneinrichtung erstrecken.

In einer weiteren Ausgestaltung der vorliegenden Erfindung kann vorgesehen sein, dass das System des Weiteren eine Bewegungseinrichtung aufweist, die dazu ausgebildet ist, die Schweißrolleneinrichtungen in eine Arbeitsposition zu bewegen, in der ein Abstand zwischen den äußeren Stegen der Schweißrolleneinrichtungen gleich oder kleiner als die Dicke beider Folienbahnen ist.

Auf diese Weise werden die äußeren Stege der Schweißrolleneinrichtungen in der Arbeitsposition so nahe zueinander angeordnet, dass die beiden Folienbahnen in dem Bereich der äußeren Stege miteinander verschweißt werden können. Die Folienbahnen werden zusätzlich in dem Bereich zwischen den äußeren Stegen der Schweißrolleneinrichtungen beim Verschweißen aneinandergedrückt.

In einer weiteren Ausgestaltung der vorliegenden Erfindung kann vorgesehen sein, dass das System des Weiteren eine Vorspanneinrichtung aufweist, die dazu ausgebildet ist, die Schweißrolleneinrichtungen in eine Ruheposition vorzuspannen, in der ein Abstand zwischen den Schweißrolleneinrichtungen größer ist als eine Dicke beider Folienbahnen.

Auf diese Weise werden die äußeren Stege der Schweißrolleneinrichtungen in der Ruheposition so weit voneinander beabstandet, dass die beiden Folienbahnen in dem Bereich der äußeren Stege nicht miteinander verschweißt werden können. In anderen Worten sind in der Ruheposition die Schweißrolleneinrichtungen von den beiden Folienbahnen soweit beabstandet, dass kein Wärmetransfer zwischen den Schweißrolleneinrichtungen und den Folienbahnen stattfinden kann. Die Ruheposition wird beispielsweise bei einem Stillstand des Systems vor oder nach dem Verschweißen, insbesondere im Fall eines Stromausfalls, eingenommen.

In einer weiteren Ausgestaltung der vorliegenden Erfindung kann vorgesehen sein, dass die Bewegungseinrichtung und die Vorspanneinrichtung mittels eines pneumatischen Zylinders ausgebildet sind.

Ein pneumatischer Zylinder weist im Allgemeinen einen Arbeitszylinder mit zwei Luftkammern und einen Kolben auf. Der Kolben ist mittels pneumatischer Ansteuerung einer der Luftkammern zwischen einer Arbeitsposition und einer Ruheposition versetzbar. Der pneumatische Zylinder kann somit sowohl als Bewegungseinrichtung als auch als Vorspanneinrichtung eingesetzt werden.

In einer weiteren Ausgestaltung der vorliegenden Erfindung kann vorgesehen sein, dass das System des Weiteren eine Trägerstruktur zum Tragen der Schweißrolleneinrichtungen aufweist, insbesondere wobei die Bewegungseinrichtung und/oder die Vorspanneinrichtung an der die Trägerstruktur angeordnet sind.

Die Trägerstruktur kann beispielsweise eine feststehende Rahmenstruktur sein, an der die verschiedenen Komponenten des Systems angebracht sind.

In einer weiteren Ausgestaltung der vorliegenden Erfindung kann vorgesehen sein, dass das System des Weiteren ein Gegenelement aufweist, wobei die Folienbahnen zwischen der Schweißrolleneinrichtung und dem Gegenelement in der Transportrichtung hindurchlaufen, wobei die Schweißrolleneinrichtung und das Gegenelement derart angeordnet sind, dass die Folienbahnen zwischen dem Gegenelement und der Schweißrolleneinrichtung aneinander gedrückt werden, insbesondere wobei im Betrieb ein Abstand zwischen der Schweißrolleneinrichtung und dem Gegenelement in einem Bereich jedes äußeren Stegs gleich oder kleiner der Summe aus der Dicke beider Folienbahnen ist, insbesondere so dass die Folienbahnen zwischen den äußeren Stegen der Schweißrolleneinrichtung und dem Gegenelement verschweißt werden.

In dieser alternativen Ausgestaltung ist nur eine Schweißrolleneinrichtung zum Erzeugen der Luftpolsterfolie vorgesehen. Das Gegenelement ist dazu vorgesehen eine Gegenanlagefläche für die Schweißrolleneinrichtung auszubilden die der Schweißrolleneinrichtungen gegenüberliegt. Dadurch wird erreicht, dass die Folienbahnen in dem Bereich zwischen den äußeren Stegen der Schweißrolleneinrichtung und der Gegenanlagefläche des Gegenelements beim Verschweißen aneinandergedrückt werden.

In einer weiteren Ausgestaltung der vorliegenden Erfindung kann vorgesehen sein, dass das System des Weiteren eine Querschweißeinrichtung aufweist, die in der Transportrichtung stromabwärts von der Schweißrolleneinrichtung angeordnet ist, und wobei die Querschweißeinrichtung dazu ausgebildet ist, die Folienbahnen quer zur Transportrichtung zu verschweißen.

In anderen Worten ist die Querschweißeinrichtung dazu vorgesehen, Schweißnähte quer zu der Transportrichtung zu erzeugen, um die Folienschläuche der Luftpolsterfolie in der Transportrichtung zu verschließen.

In einer weiteren Ausgestaltung der vorliegenden Erfindung kann vorgesehen sein, dass das Verfahren des Weiteren den Schritt aufweist:
- Bewegen der Schweißrolleneinrichtungen mittels einer Bewegungseinrichtung in eine Arbeitsposition, in der ein Abstand zwischen den äußeren Stegen der Schweißrolleneinrichtungen gleich oder kleiner als die Gesamtdicke beider Folienbahnen ist.

Auf diese Weise werden die äußeren Stege der Schweißrolleneinrichtungen in der Arbeitsposition so nahe zueinander angeordnet, dass die beiden Folienbahnen in dem Bereich der äußeren Stege miteinander verschweißt werden können. Die Folienbahnen werden zusätzlich in dem Bereich zwischen den äußeren Stegen der Schweißrolleneinrichtungen beim Verschweißen aneinandergedrückt.

In einer weiteren Ausgestaltung der vorliegenden Erfindung kann vorgesehen sein, dass das Verfahren des Weiteren den Schritt aufweist:
- Vorspannen der Schweißrolleneinrichtungen mittels einer Vorspanneinrichtung in eine Ruheposition, in der ein Abstand zwischen den Schweißrolleneinrichtungen größer ist als eine Gesamtdicke beider Folienbahnen.

Auf diese Weise werden die äußeren Stege der Schweißrolleneinrichtungen in der Ruheposition so weit voneinander beabstandet, dass die beiden Folienbahnen in dem Bereich der äußeren Stege nicht miteinander verschweißt werden können. In anderen Worten sind in der Ruheposition die Schweißrolleneinrichtungen von den beiden Folienbahnen soweit beabstandet, dass kein Wärmetransfer zwischen den Schweißrolleneinrichtungen und den Folienbahnen stattfinden kann. Die Ruheposition wird beispielsweise bei einem Stillstand des Systems vor oder nach dem Verschweißen, insbesondere im Fall eines Stromausfalls, eingenommen.

In einer weiteren Ausgestaltung der vorliegenden Erfindung kann vorgesehen sein, dass in dem Schritt des Anordnens der Düseneinrichtung die Düsen der Düseneinrichtung derart angeordnet werden, dass sich jede Düse im Betrieb zumindest teilweise in die entsprechenden gegenüberliegenden äußeren Aussparungen hinein oder durch diese hindurch erstreckt.

In anderen Worten sind die Düsen somit entlang der Längsrichtung derart angeordnet bzw. verteilt, dass jeweils eine Düse in der Transportrichtung fluchtend mit jeweils einem Paar von äußeren Aussparungen der Schweißrolleneinrichtungen angeordnet ist. In anderen Worten kann dann jede Düse Luft in Richtung der entsprechenden Aussparungen blasen. Dadurch ist jede Düse auch fluchtend mit jeweils einem entsprechenden Folienschlauch angeordnet, der in den Aussparungen erzeugt wird, so dass jede Düse Luft in den entsprechenden Folienschlauch einblasen kann.

In einer weiteren Ausgestaltung der vorliegenden Erfindung kann vorgesehen sein, dass jede Düse senkrecht zu der Transportrichtung ein Querschnittsprofil aufweist, wobei das Verfahren des Weiteren den Schritt aufweist:
- Vergrößern eines Abstands der Folienbahnen in einem Bereich jeder Düse durch Führen der Folienbahnen über das Querschnittsprofil der jeweiligen Düse.

Die Düsen der Düseneinrichtung sind bezüglich der Transportrichtung stromaufwärts von der Schweißrolleneinrichtung und zwischen den beiden Folienbahnen angeordnet. Dabei ist das Querschnittsprofil der Düsen senkrecht zu der Transportrichtung so ausgebildet, dass es sich zumindest teilweise durch die beiden Ebenen, in der die beiden Folienbahnen verlaufen, hindurch erstreckt. Im Durchlaufbetrieb laufen die Folienbahnen somit über das Querschnittsprofil der Düsen und werden entsprechend dem Querschnittsprofil der Düsen vorgeformt. Insbesondere wird durch das Vorformen mittels des Querschnittsprofil der Düsen erreicht, dass die Folienbahnen in dem Bereich der äußeren Aussparungen weiter voneinander beabstandet sind als in dem Bereich der äußeren Stege.

In einer weiteren Ausgestaltung der vorliegenden Erfindung kann vorgesehen sein, dass das Verfahren des Weiteren den Schritt aufweist:
- Querverschweißen der Folienbahnen mittels einer Querschweißeinrichtung quer zu der Transportrichtung, um die Folienschläuche zu verschließen.

In anderen Worten ist die Querschweißeinrichtung dazu vorgesehen, Schweißnähte quer zu der Transportrichtung zu erzeugen, um die Folienschläuche der Luftpolsterfolie in der Transportrichtung zu verschließen.

Ausführungsformen der Erfindung sind in der Zeichnung dargestellt und werden in der nachfolgenden Beschreibung näher erläutert. Es zeigen:
- Fig.1: eine Längsschnittansicht einer Ausführungsform einer Schweißrolleneinrichtung bezüglich einer Längsachse der Schweißrolleneinrichtung;
- Fig. 2: eine schematische Ansicht einer ersten Ausführungsform eines Systems zum Erzeugen einer Luftpolsterfolie;
- Fig. 3: eine schematische Ansicht einer zweiten Ausführungsform eines Systems zum Erzeugen einer Luftpolsterfolie;
- Fig. 4: eine Längsschnittansicht des Systems aus Fig. 2 senkrecht zu der Kontaktfläche zwischen den Schweißrolleneinrichtungen;
- Fig. 5: eine Längsschnittansicht des Systems aus Fig. 3 senkrecht zu der Kontaktfläche zwischen der Schweißrolleneinrichtung und dem Gegenelement;
- Fig. 6: eine schematische Ansicht einer Ausführungsform eines Verfahrens zum Erzeugen einer Luftpolsterfolie;
- Fig. 7: eine isometrische Ansicht einer dritten Ausführungsform eines Systems zum Erzeugen einer Luftpolsterfolie;
- Fig. 8: eine Seitenansicht des Systems aus Fig. 7 im Schnitt entlang der Linie A-A;
- Fig. 9: eine Längsschnittansicht des Systems aus den Fig. 7 und 8 entlang der Linie B-B.

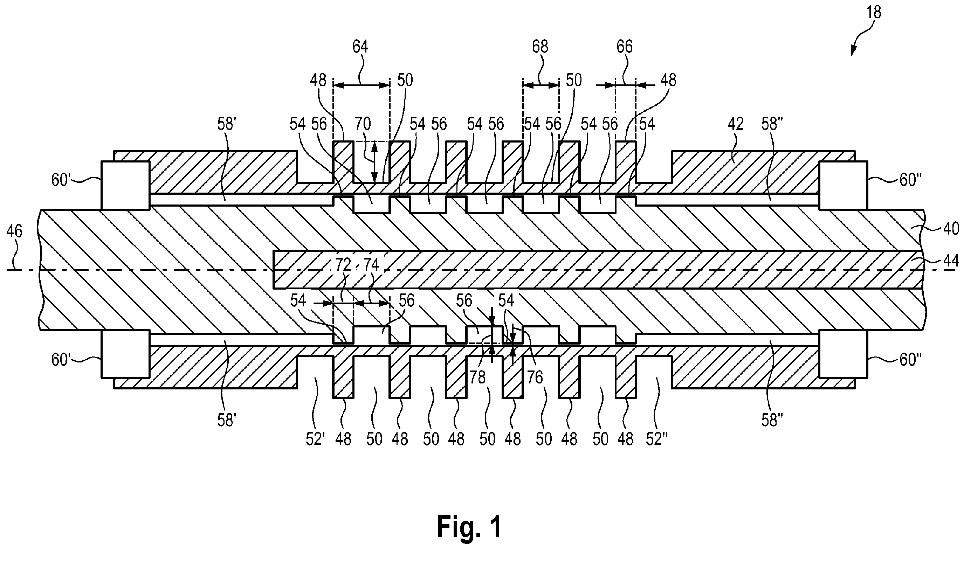

Fig. 1 zeigt eine Ausführungsform einer Schweißrolleneinrichtung 18 zum erzeugen einer Luftpolsterfolie aus zwei aufeinanderliegenden Folienbahnen im Durchlaufbetrieb. Die Schweißrolleneinrichtung weist eine feststehende Innenwelle 40, eine um die Innenwelle 40 angeordnete Außenwelle 42 und eine Heizeinrichtung 44 auf. Die Außenwelle 42 und die Innenwelle 40 weisen eine gemeinsame Längsachse 46 auf. Die Längsachse 46 erstreckt sich in einer Längsrichtung. Die Außenwelle 42 ist um die Längsachse 46 in einer Drehrichtung drehbar gelagert.

Die Heizeinrichtung 44 ist dazu eingerichtet, die Innenwelle 40 zum beheizen. Dazu ist die Heizeinrichtung 44 in der Innenwelle 40 angeordnet. Die Heizeinrichtung 44 kann beispielsweise eine Heizpatrone sein, wobei ist die Innenwelle 40 hohl ausgebildet und die Heizpatrone in die Innenwelle 40 eingeschoben ist.

Die Außenwelle 42 weist eine Mehrzahl von äußeren Stegen 48 auf. Die äußeren Stege 42 erstrecken sich bezüglich der Längsachse 46 in einer radialen Richtung nach außen hin. Die äußeren Stege 42 weisen an einem radial äußeren Ende in der Längsrichtung jeweils eine Erstreckung bzw. Dicke 66 auf, die 0,5 mm bis 1 cm, insbesondere 3 mm, beträgt. Die äußeren Stege 42 sind in der Längsrichtung voneinander beabstandet. Die Außenwelle 42 weißt zwischen jeweils zwei benachbarten, äußeren Stegen 48 jeweils eine äußere Aussparung 50 auf. Die äußeren Aussparungen 50 weisen an einem radial äußeren Ende in der Längsrichtung jeweils eine Erstreckung bzw. Dicke 68 auf, die 0,5 mm bis 2,7 cm, insbesondere 5 mm, beträgt.

Die äußeren Aussparungen 50 weisen in der radialen Richtung eine Erstreckung bzw. Tiefe 70 auf. Die Tiefe 70 entspricht einem Abstand zwischen einem Boden einer Aussparung 50 und dem radial äußeren Ende eines benachbarten äußeren Steaks 48. In anderen Worten entspricht die Tiefe 70 auch einer Erstreckung bzw. Länge der äußeren Stege 48 in der radialen Richtung.

Vorzugsweise sind die äußeren Stege 42 in der Längsrichtung aufeinanderfolgend mit demselben Versatz 64 angeordnet. Der Versatz 64 benachbarter Stege beträgt 0,1 Zentimeters bis 3 cm, insbesondere 0,8 cm. Der Versatz 64 entspricht dabei der Summe aus der Dicke 66 eines äußeren Stegs 48 und der Dicke 68 einer äußeren Aussparung 50.

Die Innenwelle 40 weist eine Mehrzahl von inneren Stegen 54 auf. Die inneren Stege 54 erstrecken sich bezüglich der Längsachse 46 in der radialen Richtung in Richtung der Außenwelle 42 hin. Die inneren Stege 54 sind in der Längsrichtung voneinander beabstandet. Die inneren Stege 54 weisen an einem radial äußeren Ende in der Längsrichtung jeweils eine Erstreckung bzw. Dicke 72 auf, die 0,5 mm bis 1 cm, insbesondere 3 mm, beträgt. Die Innenwelle 40 weist zwischen jeweils zwei benachbarten, inneren Stegen 54 jeweils eine innere Aussparung 56 auf. Die inneren Aussparungen 56 weisen an einem radial äußeren Ende in der Längsrichtung jeweils eine Erstreckung bzw. Dicke 74 auf, die 0,5 mm bis 2,7 cm, insbesondere 5 mm, beträgt.

Ein radialer Abstand 76 der inneren Stege 54 zu der Außenwelle 42 ist kleiner als ein radialer Abstand 78 von dem Boden der inneren Aussparungen 56 zu der Außenwelle 42. Der radialer Abstand 76 der inneren Stege 54 zu der Außenwelle ist kleiner als 0,5 µm. Vorzugsweise beträgt der radiale Abstand 76 0,05 µm bis 0,5 µm, insbesondere 0,1 µm. Der radiale Abstand 78 der inneren Aussparungen 56 zu der Außenwelle ist größer als 0,5 mm. Vorzugsweise beträgt der radialer Abstand 78 0,5 mm bis 1 cm, insbesondere 3 mm.

Die inneren Stege 54 sind in der Längsrichtung derart angeordnet, dass die inneren Stege 54 korrespondierend, insbesondere radial fluchtend, zu den äußeren Stegen 48 angeordnet sind.

Somit ist ein radialer Abstand zwischen der Innenwelle 40 und der Außenwelle 42 in dem Bereich der äußeren Stege 48 kleiner als in dem Bereich der äußeren Aussparungen 50. Dadurch ist die Innenwelle 40 derart ausgebildet, dass ein Wärmetransfer zwischen der Innenwelle 40 und der Außenwelle 42 in einem Bereich der äußeren Stege 48 größer ist als in einem Bereich der äußeren Aussparungen 50.

Die Außenwelle 42 weist des Weiteren zwei äußerste Aussparungen 52', 52" auf. Die äußersten Aussparungen 52', 52" sind bezüglich der Längsrichtung auf gegenüberliegenden Seiten der äußeren Stege 48 der Außenwelle 42 angeordnet. Die äußersten Aussparungen 52', 52" der Außenwelle 42 erstrecken sich in der Längsrichtung weg von den äußeren Stegen 48.

Die Innenwelle 40 weist des Weiteren zwei äußerste Aussparungen 58', 58" auf. Die äußersten Aussparungen 58', 58" sind bezüglich der Längsrichtung auf gegenüberliegenden Seiten der inneren Stege 54 der Außenwelle 40 angeordnet. Die äußersten Aussparungen 58', 58" der Innenwelle 40 erstrecken sich in der Längsrichtung weg von den inneren Stegen 54.

Die Schweißrolleneinrichtung 18 weist des Weiteren zwei Lagereinrichtungen 60', 60" auf. Die Lagereinrichtungen 60', 60" sind zum Lagern der Außenwelle 42 auf der Innenwelle 40 eingerichtet. Die Lagereinrichtungen 60', 60" sind jeweils an einem axialen Ende der Außenwelle 42 angeordnet. Die Innenwelle 40 erstreckt sich in der Längsrichtung mindestens jeweils bis zu dem axialen Ende der Außenwelle 42 hin.

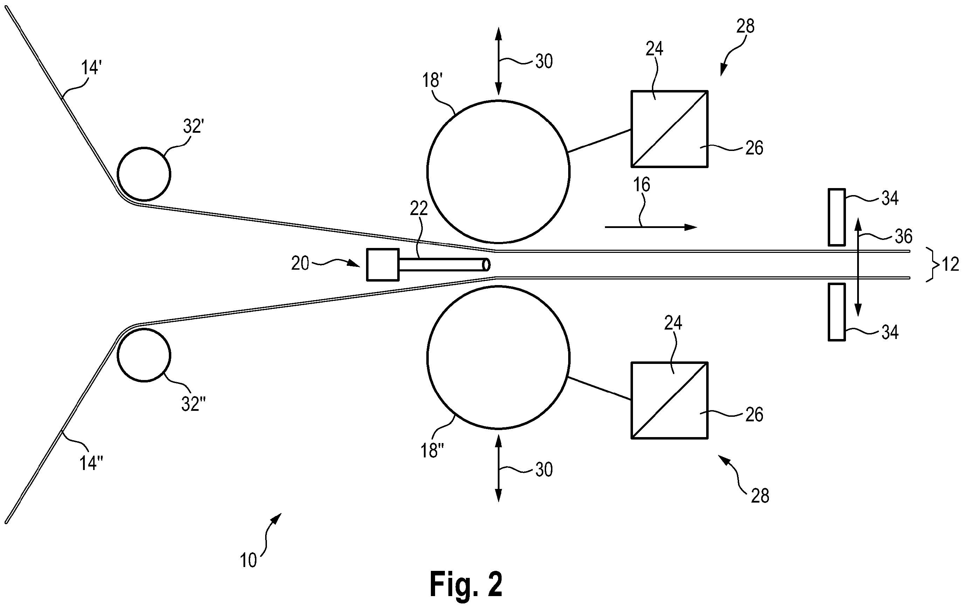

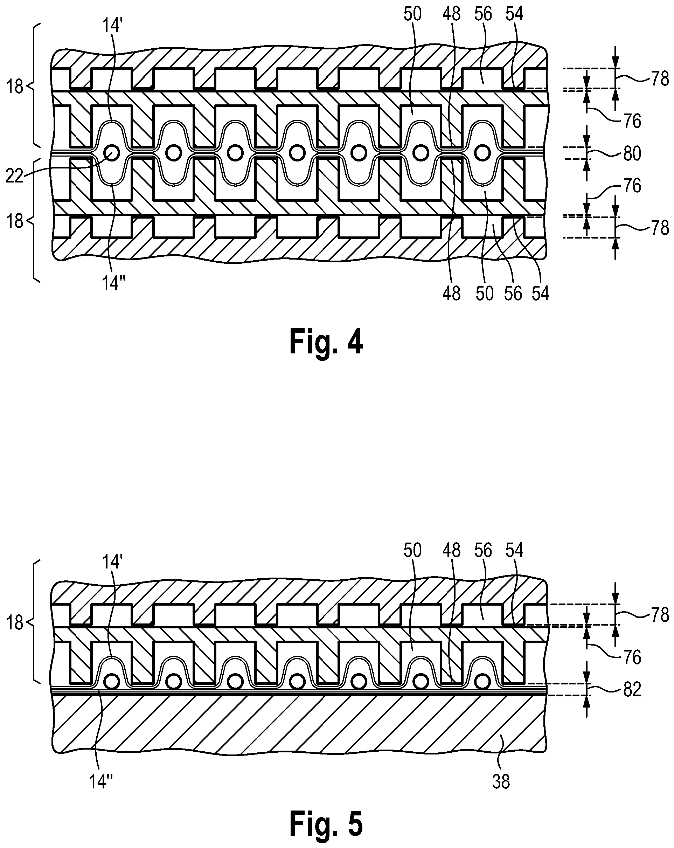

Die Figuren 2 und 4 zeigen eine erste Ausführungsform eines Systems 10 zum Erzeugen einer Luftpolsterfolie12 aus zwei aufeinanderliegenden Folienbahnen 14', 14" im Durchlaufbetrieb, in dem die beiden Folienbahnen 14', 14" in einer Transportrichtung 16 bewegt werden. Das System 10 weist zwei Schweißrolleneinrichtungen 18', 18" und eine Düseneinrichtung 20 auf. Jede der Schweißrolleneinrichtungen 18', 18" ist entsprechend der Schweißrolleneinrichtung 18 aus Fig. 1 ausgebildet.

Die Schweißrolleneinrichtungen 18', 18" sind auf gegenüberliegenden Seiten der Folienbahnen 14', 14" angeordnet, sodass die Folienbahnen 14', 14" zwischen den Schweißrolleneinrichtungen 18', 18" in der Transportrichtung 16 hindurchlaufen. Die Längsachsen der beiden Innenwellen der Schweißrolleneinrichtungen 18', 18" sind senkrecht zu der Transportrichtung 16 und parallel zueinander angeordnet.

Die äußeren Stege 48 der Schweißrolleneinrichtungen 18', 18" sind in der Längsrichtung korrespondierend zueinander angeordnet. In anderen Worten sind jeweils zwei äußere Stege 48 der Schweißrolleneinrichtungen 18', 18" bezüglich der Folienbahnen 14', 14" gegenüberliegend zueinander, sprich auf gegenüberliegenden Seiten der Folienbahnen 14', 14" und zueinander gerichtet, angeordnet. Dies ist insbesondere in Fig. 4 dargestellt. Die äußeren Stege 48 und die äußeren Aussparungen 50 der beiden Schweißrolleneinrichtungen 18', 18" sind somit paarweise angeordnet, wobei jedes Paar bezüglich der Folienbahnen 14', 14" gegenüberliegend zueinander angeordnet ist.

Die korrespondierenden, äußeren Stege 48 der beiden Schweißrolleneinrichtungen 18', 18" weisen einen Abstand 80 auf. In eine Arbeitsposition des Systems 10, in dem verschweißt wird, ist der Abstand 80 gleich oder kleiner als die Gesamtdicke der beiden Folienbahnen 14', 14". Die Gesamtdicke entspricht der Summe der beiden Dicken der beiden Folienbahnen 14', 14". In einer Ruheposition, in der nicht verschweißt wird, ist der Abstand 80 größer als die Gesamtdicke der beiden Folienbahnen 14', 14".

Die Düseneinrichtung 20 ist dazu ausgebildet einem Luftstrom zwischen den Folienbahnen 14', 14" in der Transportrichtung 16 zu erzeugen. Die Düseneinrichtung 20 ist hierzu zwischen den beiden Folienbahnen 14', 14" angeordnet. Die Düseneinrichtung 20 weist eine Mehrzahl von Düsen 22 auf. Bezüglich der Transportrichtung 16 sind die Düsen 22 der Düseneinrichtung 20 stromaufwärts von den Schweißrolleneinrichtungen 18', 18" angeordnet. Die Düsen 22 sind in der Längsrichtung derart angeordnet, dass jeweils eine Düse 22 in der Transportrichtung 16 korrespondierend, insbesondere fluchtend, mit jeweils zwei korrespondierenden, äußeren Aussparungen 50 der Schweißrolleneinrichtungen 18', 18" angeordnet ist. Jede Düse 22 erstreckt sich im Betrieb zumindest teilweise in die entsprechenden Aussparungen 50 hinein oder durch die entsprechenden Aussparungen hindurch erstreckt.

Jede Düse 22 der Düseneinrichtung 20 weiß senkrecht zu der Transportrichtung 16 ein Querschnittsprofil auf. Das Querschnittsprofil ist derart ausgebildet, dass ein Abstand der Folienbahnen in einem Bereich jeder Düse 22 vergrößert wird. Dabei ist das Querschnittsprofil der Düsen 22 senkrecht zu der Transportrichtung 16 so ausgebildet, dass es sich zumindest teilweise durch die beiden Ebenen, in der die beiden Folienbahnen 14', 14" verlaufen, hindurch erstreckt. Im Durchlaufbetrieb laufen die Folienbahnen 14', 14" somit über das Querschnittsprofil der Düsen 22 und werden entsprechend dem Querschnittsprofil der Düsen geführt bzw. vorgeformt. Insbesondere wird durch das Vorformen mittels des Querschnittsprofil der Düsen 22 erreicht, dass die Folienbahnen 14', 14" in dem Bereich der äußeren Aussparungen 50 weiter voneinander beabstandet sind als in dem Bereich der äußeren Stege 48.

Das System 10 weist des Weiteren eine Bewegungseinrichtung 24 auf. Die Bewegungseinrichtung 24 ist dazu ausgebildet, die Schweißrolleneinrichtungen 18', 18" relativ zueinander in einer Bewegungsrichtung 30 aus der Ruheposition in die Arbeitsposition zu bewegen. Die Bewegungsrichtung 30 ist senkrecht zu der Transportrichtung 16 und der Längsrichtung der Längsachsen der beiden Innenwellen der Schweißrolleneinrichtungen 18', 18" angeordnet.

Das System 10 weist des Weiteren eine Vorspanneinrichtung 26 auf. Die Vorspanneinrichtung 26 ist dazu ausgebildet, die Schweißrolleneinrichtungen 18', 18" in der Ruheposition vorzuspannen.

Vorzugsweise weist das System 10 einen pneumatischen Zylinders 28 auf, der die Bewegungseinrichtung 24 und die Vorspanneinrichtung 26 ausbildet. Der pneumatische Zylinder 28 kann beispielsweise einen Arbeitszylinder mit zwei Luftkammern und einen Kolben aufweisen. Der Kolben ist mittels pneumatischer Ansteuerung einer der Luftkammern zwischen einer Arbeitsposition und einer Ruheposition versetzbar. In der Ruheposition haben beide Luftkammern Normaldruck, sprich ca. 1 bar. Zum versetzen des Kolbens in die Arbeitsposition wird eine Kammer pneumatisch auf einen höheren Druck, beispielsweise 12 bar angehoben, wodurch sich der Kolben in die Arbeitsposition bewegt.

Alternativ können die Bewegungseinrichtung 24 und die Vorspanneinrichtung 26 auch separat ausgebildet sein. Beispielsweise kann die Vorspanneinrichtung 26 ein Federelement aufweisen, das die Schweißrolleneinrichtungen in eine Ruheposition vorspannt. Die Bewegungseinrichtung 24 kann eine elektrische, magnetische oder pneumatische Antriebseinrichtung aufwiesen, die dazu ausgebildet ist, die Schweißrolleneinrichtungen 18', 18" relativ zueinander in einer Bewegungsrichtung 30 aus der Ruheposition entgegen der Vorspannkraft der Vorspanneinrichtung 24 in die Arbeitsposition zu bewegen. Beispielsweise kann die Bewegungseinrichtung 24 hierzu einen Elektromotor aufweisen.

Des Weiteren kann das System auch eine Trägerstruktur zum Tragen der Schweißrolleneinrichtungen 18', 18", denn Düseneinrichtung 20, der Bewegungseinrichtung 24 und der Vorspanneinrichtung 26 aufweisen.

Des Weiteren kann das System 10 eine Führungseinrichtung für die Folienbahnen 14', 14" aufweisen. Die Führungseinrichtung kann beispielsweise jeweils eine Umlenkrolle 32', 32" für jeweils eine der Folienbahnen 14', 14" aufweisen.

Des Weiteren kann das System 10 eine Querschweißeinrichtung 34 aufweisen. Die Querschweißeinrichtung ist in der Transportrichtung 16 stromabwärts von den Schweißrolleneinrichtungen 18', 18" angeordnet. Die Querschweißeinrichtung 34 ist dazu ausgebildet, die Folienbahnen 14', 14" quer zur Transportrichtung 16 zu verschweißen. Die Querschweißeinrichtung 34 kann zum Verschweißen beispielsweise einen beheizten Oberstempel und einen beheizten Unterstempel aufweisen, die auf gegenüberliegenden Seiten der Folienbahnen 14', 14" angeordnet sind, so dass die Folienbahnen 14', 14" zwischen dem Oberstempel und dem Unterstempel hindurchlaufen. Zum Verschweißen werden der Oberstempel und der Unterstempel mittels einer weiteren Antriebseinheit relativ zueinander in einer Querschweißbewegungsrichtung 36 aufeinander zu bewegt, um in Kontakt mit den Folienbahnen 14', 14" und diese somit quer zu verschweißen. Nach dem Querverschweißen werden die Stempel auseinander bewegt, so dass die Folienbahnen 14', 14" ohne Kontakt mit der Querschweißbewegungsrichtung 36 zwischen den Stempeln hindurchlaufen können.

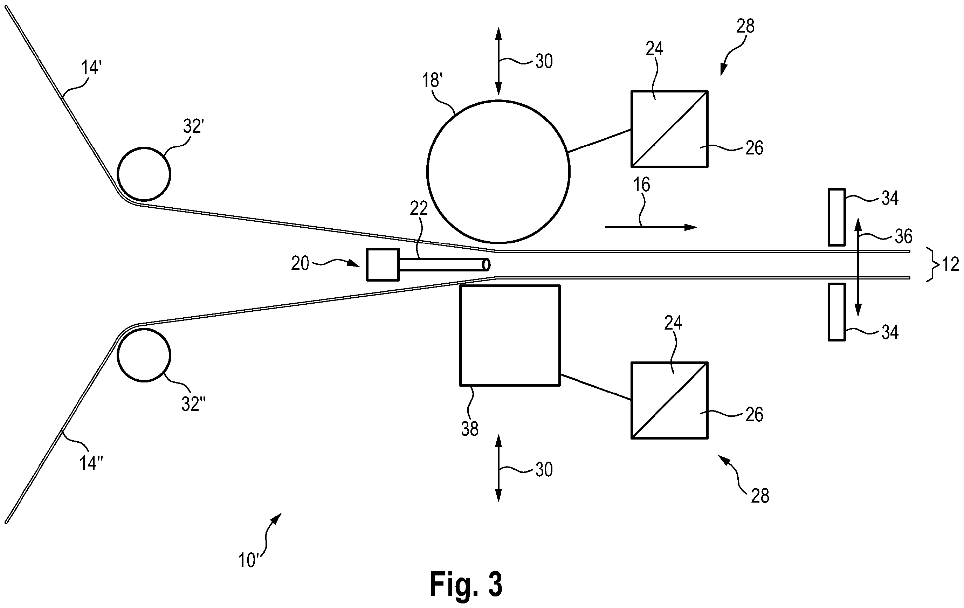

Die Figuren 3 und 5 zeigen eine zweite Ausführungsform eines Systems 10' zum Erzeugen einer Luftpolsterfolie 12 aus zwei aufeinanderliegenden Folienbahnen 14', 14" im Durchlaufbetrieb. Das System 10' entspricht im Wesentlichen dem System 10 aus den Figuren 2 und 4. Gleiche Elemente sind mit gleichen Bezugszeichen versehen und werden nicht näher erläutert.

Der einzige Unterschied des Systems 10` zu dem System 10 aus den Figuren 2 und 4 besteht darin, dass in dem System 10' nur eine Schweißrolleneinrichtung 18 vorgesehen ist. Auf der gegenüberliegenden Seite der Folienbahnen 14', 14" ist statt einer zweiten Schweißrolleneinrichtung ein Gegenelement 38 angeordnet. Die Folienbahnen 14', 14" laufen zwischen der Schweißrolleneinrichtung 18 und dem Gegenelement 38 in der Transportrichtung 16 hindurch.

Die Schweißrolleneinrichtung 18 und das Gegenelement 38 sind derart angeordnet, dass die Folienbahnen zwischen dem Gegenelement 38 und der Schweißrolleneinrichtung 18 aneinandergedrückt werden. Insbesondere kann vorgesehen sein, dass im Betrieb ein Abstand 82 zwischen der Schweißrolleneinrichtung 18 und dem Gegenelement 38 in einem Bereich jedes äußeren Stegs 48 gleich oder kleiner der Gesamtdicke der beiden Folienbahnen 14', 14" ist, sodass die Folienbahnen 14', 14" zwischen den äußeren Stegen 48 der Schweißrolleneinrichtung 18 und dem Gegenelement 38 verschweißt werden.

Vorzugsweise ist in einer Arbeitsposition des Systems 10, in dem verschweißt wird, der Abstand 82 gleich oder kleiner als die Gesamtdicke der beiden Folienbahnen 14', 14". Die Gesamtdicke entspricht der Summe der beiden Dicken der beiden Folienbahnen 14', 14". In einer Ruheposition, in der nicht verschweißt wird, ist der Abstand 82 größer als die Gesamtdicke der beiden Folienbahnen 14', 14".

Die Bewegungseinrichtung 24 und die Vorspanneinrichtung 26 können hierbei wie in ersten Ausführungsform ausgebildet sein, um die Schweißrolleneinrichtung 18 und das Gegenelement 38 relativ zueinander zu bewegen. Die Vorspanneinrichtung 26 ist dazu ausgebildet, die Schweißrolleneinrichtungen 18 und das Gegenelement 38 in der Ruheposition vorzuspannen. Die Bewegungseinrichtung 24 ist dazu ausgebildet, die Schweißrolleneinrichtungen 18 und das Gegenelement 38 relativ zueinander in der Bewegungsrichtung 30 aus der Ruheposition in die Arbeitsposition zu bewegen.

Wie in den Figuren 4 und 5 bezüglich der ersten und der zweiten Ausführungsform der Systeme 10, 10' zum Erzeugen einer Luftpolsterfolie dargestellt, sind die Folienbahnen 14', 14" im Bereich der äußeren Aussparungen 48 voneinander beabstandet und verlaufen um die Düsen 22 der Düseneinrichtung 20 herum. Insbesondere sind die Düsen 22 zwischen den Folienbahnen 14', 14" und zumindest teilweise in den äußeren Aussparungen 48 angeordnet, so dass die Folienbahnen 14', 14" im Bereich der äußeren Aussparungen 48 um ein Querschnittsprofil der Düsen 22 herum geführt werden, um die Folienbahnen 14', 14" im Bereich der äußeren Aussparungen 48 voneinander zu beabstanden.

Die beiden Folienbahnen 14', 14" werden nur in dem Bereich der äußeren Stege 48 und nicht in dem Bereich der äußeren Aussparungen 50 miteinander verscheißt. In anderen Worten werden mittels der äußeren Stege fortlaufende Schweißnähte in der Transportrichtung erzeugt. In dem Bereich der äußeren Aussparungen 48 sind die Folienbahnen 14', 14", wie zuvor beschrieben, voneinander beabstandet. Somit werden durch die äußeren Stege 48 und die äußeren Aussparungen 50 fortlaufende Folienschläuche erzeugt. Die Düsen 22 blasen Luft in Richtung der Transportrichtung 16, um die erzeugten Folienschläuche konstant mit Luft zu füllen und damit die Folienschläuche gleichmäßig zu formen.

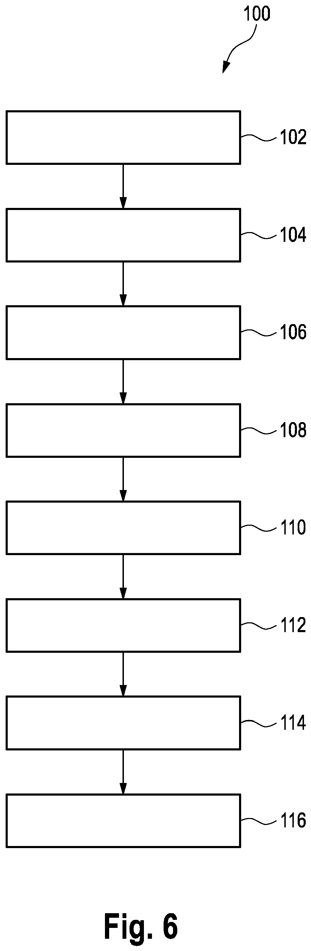

Fig. 6 zeigt eine Ausführungsform eines Verfahrens 100 zum Erzeugen einer Luftpolsterfolie 12 aus zwei aufeinanderliegenden Folienbahnen 14', 14" im Durchlaufbetrieb, in dem die Folienbahnen 14', 14" in einer Transportrichtung 16 bewegt werden. Das Verfahren 100 kann mittels des Systems 10 gemäß der ersten Ausführungsform aus den Figuren 2 und 4 durchgeführt werden.

In einem ersten Schritt 102 des Verfahrens 100 werden zwei Schweißrolleneinrichtungen 18', 18" auf zwei gegenüberliegenden Seiten der Folienbahnen 14', 14" angeordnet, so dass die Folienbahnen 14', 14" zwischen den Schweißrolleneinrichtungen 18', 18" hindurchlaufen. Die Schweißrolleneinrichtungen 18', 18" sind jeweils entsprechend der Schweißrolleneinrichtungen 18 aus Fig. 1 ausgebildet. Die Längsachsen 46 der beiden Innenwellen 40 der Schweißrolleneinrichtungen 18', 18" sind parallel zueinander und senkrecht zu der Transportrichtung 16 angeordnet. Die äußeren Stege 48 der Schweißrolleneinrichtungen 18', 18" sind in der Längsrichtung korrespondierend zueinander angeordnet, so dass je zwei äußeren Stege 18 und je zwei äußere Aussparungen 50 gegenüberliegend zueinander angeordnet sind.

In einem weiteren optionalen Schritt 104 des Verfahrens 100 werden die Schweißrolleneinrichtungen 18', 18" mittels einer Vorspanneinrichtung 24 in eine Ruheposition, in der ein Abstand 80 zwischen den Schweißrolleneinrichtungen 18', 18" größer ist als eine Gesamtdicke beider Folienbahnen 14', 14".

In einem weiteren Schritt 106 des Verfahrens 100 wird eine Düseneinrichtung 20 zwischen den Folienbahnen angeordnet. Die Düseneinrichtung 20 kann vorzugsweise eine Mehrzahl von Düsen 22 aufweisen. Die Düsen 22 werden entlang der Längsrichtung angeordnet, so dass jeweils eine Düse 22 in der Transportrichtung 16 korrespondierend, insbesondere fluchtend, mit je zwei gegenüberliegenden äußeren Aussparungen 48 der Schweißrolleneinrichtung 18', 18" angeordnet ist.

Insbesondere kann in dem Schritt des Anordnens 106 der Düseneinrichtung 20 vorgesehen sein, dass die Düsen 22 der Düseneinrichtung 20 derart angeordnet werden, dass sich jede Düse 22 im Betrieb zumindest teilweise in die entsprechenden gegenüberliegenden äußeren Aussparungen 50 hinein oder durch diese hindurch erstreckt

In einem weiteren optionalen Schritt 108 des Verfahrens 100 werden die Schweißrolleneinrichtungen 18', 18" mittels einer Bewegungseinrichtung 24 in eine Arbeitsposition bewegt, in der ein Abstand 80 zwischen den gegenüberliegenden äußeren Stegen 48 der Schweißrolleneinrichtungen 18', 18" gleich oder kleiner als die Gesamtdicke beider Folienbahnen 14', 14" ist.

In einem weiteren optionalen Schritt 110 des Verfahrens 100 wird ein Abstand der Folienbahnen 14', 14" in einem Bereich jeder Düse 22 durch Führen der Folienbahnen 14', 14" über das Querschnittsprofil der jeweiligen Düse 22 vergrößert.

In einem weiteren Schritt 112 des Verfahrens 100 wird ein Luftstrom mittels der Düseneinrichtung 20 zwischen den Folienbahnen 14', 14" in der Transportrichtung 16 erzeugt. Vorzugsweise bläst dabei jede Düse 22 Luft in Richtung der Transportrichtung 16.

In einem weiteren Schritt 114 des Verfahrens 100 werden die Folienbahnen 14', 14" mittels der Schweißrolleneinrichtungen 18', 18" in der Transportrichtung 16 nur in dem Bereich der äußeren Stege 48 verschweißt, so dass Schweißnähte in der Transportrichtung 16 erzeugt werden und zwischen den Schweißnähten Folienschläuche ausgebildet werden, die sich in der Transportrichtung erstrecken.

In einem weiteren optionalen Schritt 116 des Verfahrens 100 werden die Folienbahnen 14', 14" mittels einer Querschweißeinrichtung 34 quer zu der Transportrichtung 16 verschweißt, um die Folienschläuche zu verschließen. Die Querschweißeinrichtung 34 ist bezüglich der Transportrichtung 16 stromabwärts von den Schweißrolleneinrichtungen 18', 18" angeordnet.

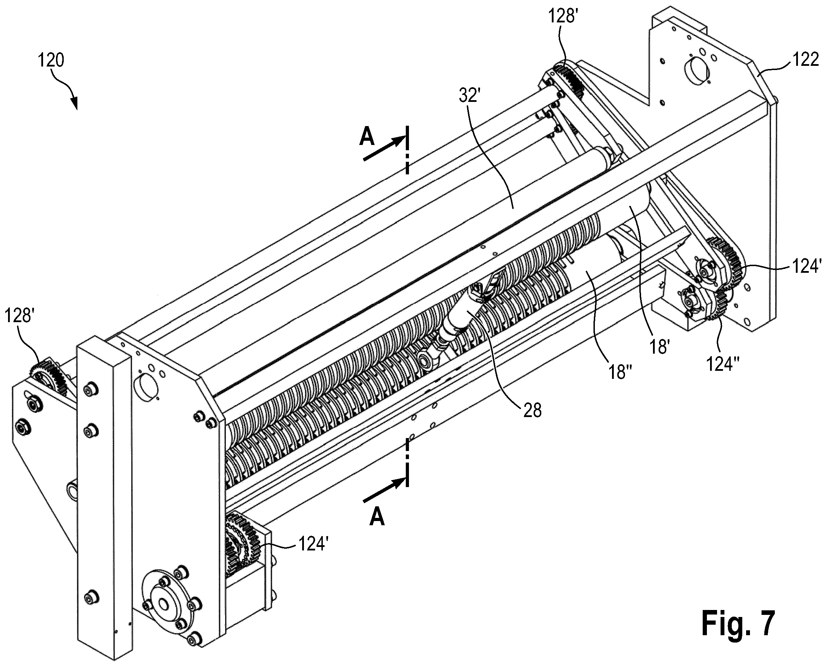

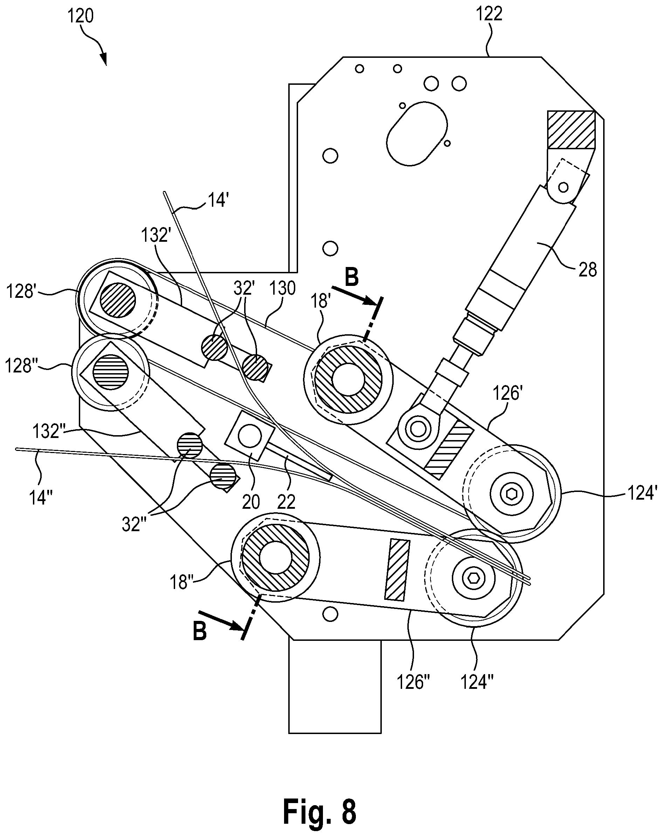

Die Figuren 7 bis 9 zeigen eine dritte Ausführungsform eines Systems 120 zum Erzeugen einer Luftpolsterfolie 12 aus zwei aufeinanderliegenden Folienbahnen 14', 14" im Durchlaufbetrieb, in dem die beiden Folienbahnen 14', 14" in einer Transportrichtung 16 bewegt werden. Das System 120 entspricht im Wesentlichen dem System 10 aus den Figuren 2 und 4. Gleiche Elemente sind mit gleichen Bezugszeichen versehen und werden nicht näher erläutert.

Das System 120 weißt des Weiteren eine Trägerstruktur auf. Die Trägerstruktur 122 trägt die einzelnen Komponenten des Systems 120. Insbesondere trägt die Trägerstruktur 122 die Schweißrolleneinrichtungen 18', 18". Die Bewegungseinrichtung 24 und die Vorspanneinrichtung 26 sind als pneumatischer Zylinder 28 ausgebildet, der ebenfalls an der Trägerstruktur 122 angeordnet ist bzw. von der Trägerstruktur 122 getragen wird.

Die Schweißrolleneinrichtungen 18', 18" sind über einen Aktivierungsmechanismus mit dem pneumatischen Zylinder 28 verbunden. Über diesen Aktivierungsmechanismus sind die beiden Schweißrolleneinrichtungen 18', 18" zwischen der Arbeitsposition und der Ruheposition bewegbar.

Der Aktivierungsmechanismus weist zwei erste Verbindungselemente 126', 126" auf. Je eine Schweißrolleneinrichtung 18', 18" ist an jeweils einer der ersten Verbindungselemente 126', 126" befestigt. Der Aktivierungsmechanismus weist des Weiteren ein erstes Paar von Zahnrädern 124', 124" auf, das ineinander greift. Je eines der ersten Verbindungselemente 126', 126" ist drehfest mit je einem der Zahnräder 124', 124" verbunden. Die Verbindungselemente 126', 126" erstrecken sich im Wesentlichen senkrecht zu den Längsachsen 46 der Schweißrolleneinrichtungen 18', 18" und im wesentlichen senkrecht zu den Drehachsen der entsprechenden Zahnräder 124', 124". Die Schweißrolleneinrichtungen 18', 18" sind somit über den Aktivierungsmechanismus in ihrer Relativbewegung miteinander gekoppelt.

Der pneumatische Zylinder 28 ist über eine Querverstrebung mit einem der ersten Verbindungselemente 126' gekoppelt. Der pneumatische Zylinder 28 ist dazu ausgebildet dieses Verbindungselement 126' um eine Drehachse des entsprechenden Zahnrades 124' zu schwenken, um dadurch eine Relativbewegung der Schweißrolleneinrichtungen 18', 18" zueinander hervorzurufen.

Das System 120 weißt, wie das System 10 aus den Figuren 2 und 4, auch eine Führungseinrichtung zum Führen der Folienbahnen 14', 14" auf. Die Führungseinrichtung weist zwei Paare von Umlenkrollen 32', 32" auf. Jeweils ein paar von Umlenkrollen 32', 32" ist zum Führen jeweils einer Folienbahnen 14', 14" vorgesehen. Eine erste Folienbahn 14', die Oberfolie, verläuft zwischen dem ersten Paar von Umlenkrollen 32' hindurch. Die zweite Folienbahn 14", die Unterfolie, verläuft zwischen dem zweiten Paar von Umlenkrollen 32" hindurch.

Das erste Paar von Umlenkrollen 32' und das zweite Paar von Umlenkrollen 32" ist relativ zueinander bewegbar. Diese Relativbewegung ist mit der Relativbewegung der Schweißrolleneinrichtungen 18', 18" gekoppelt. Ein Abstand zwischen den beiden Umlenkrollenpaaren 32', 32" ist in der Arbeitsposition größer als in der Ruheposition. Somit verläuft die Relativbewegung der Umlenkrollenpaare 32', 32" entgegengesetzt zu der Relativbewegung der Schweißrolleneinrichtungen 18', 18". Die Kopplung erfolgt über ein zweites Paar von Zahnrädern 128', 128', welches ebenfalls ineinander greift, wobei eines der zweiten Zahnräder 128 über einen Endlosriemen bzw. Endloskette 130 mit einem der ersten Zahnräder 124' gekoppelt ist.

Des Weiteren weist das System 120 zwei zweite Verbindungselemente 132', 132" auf. Je ein Paar von Umlenkrollen 32', 32" ist an jeweils einem der zweiten Verbindungselemente 132', 132" befestigt. Je eines der zweiten Verbindungselemente 132', 132" ist drehfest mit je einem der Zahnräder 128', 128" verbunden. Die Verbindungselemente 132', 132" erstrecken sich im Wesentlichen senkrecht zu den Drehachsen der korrespondierenden Zahnräder 128', 128".

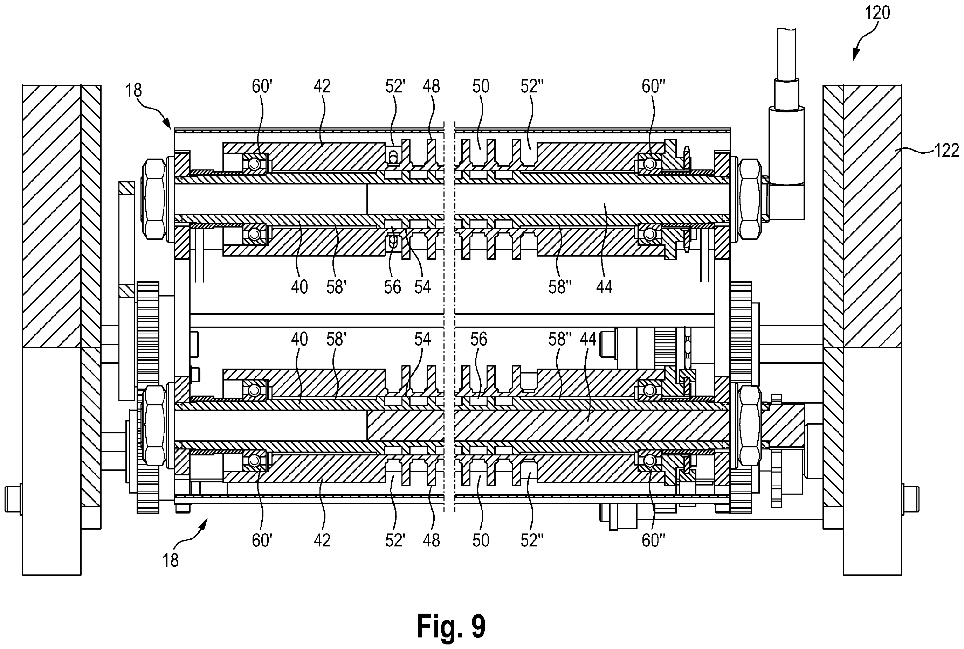

In Fig. 9 sind insbesondere die Anordnung und die Ausbildung der Schweißrolleneinrichtungen 18', 18' genauer dargestellt. Die Schweißrolleneinrichtungen 18', 18" sind im Wesentlichen wie die Schweißrolleneinrichtung 18 aus Figur eins ausgebildet und sind im Wesentlichen wie die Schweißrolleneinrichtungen 18', 18" aus Fig. 4 zueinander angeordnet. Im Unterschied zu der Anordnung aus Fig. 4, sind die Schweißrolleneinrichtungen 18', 18' sind in Fig. 9 in der Ruheposition angeordnet, während die Schweißrolleneinrichtungen 18', 18' in der Darstellung aus Fig. 4 in der Arbeitsposition angeordnet sind.

Ein weiterer Unterschied der Ausführungsform aus Fig. 9 zu der Ausführungsform aus Fig. 4 besteht darin, dass sich jeder äußere Steg 48 nach radial außen hin verjüngt. In anderen Worten weist jeder äußere Steg 48 einen ersten Bereich mit einer ersten Erstreckung bzw. Dicke in der Längsrichtung und einen zweiten Bereich mit einer zweiten Erstreckung bzw. Dicke in der Längsrichtung auf, wobei der zweite Bereich radial weiter außen von dem ersten Bereich angeordnet ist, und wobei die zweite Erstreckung kleiner als die erste Erstreckung ist. In der vorliegenden Ausführungsform der Fig. 9 ist eine Erstreckung in der Längsrichtung an einem radial innen gelegenen Ende der Stege 48 größer als eine Erstreckung in der Längsrichtung an einem radial außen gelegenen Ende der Stege 48. In anderen Worten weisen die Stege 48 einen radial innen gelegenen, dicken Sockel und eine radial außen gelegene, dünne Spitze auf, wobei der Sockel dicker ist als die Spitze. Mittels dieser Anordnung wird zum einen die Stabilität der äußeren Stege 48 verbessert und zum anderen ein effizienter Wärmetransfer zu dem radialer äußeren Ende der Stege 48 ermöglicht.

Jede der Lagereinrichtungen 60', 60" der beiden Schweißrolleneinrichtungen 18', 18" weist ein erstes und ein zweites Kopplungselementen und einen Lagerring auf, der zwischen den beiden Kopplungselementen angeordnet ist. Das erste Kopplungselement ist mit der Innenwelle 40 fest verbunden und das zweite Kopplungselement ist mit der Außenwelle 42 fest verbunden.

## Patentansprüche

1. Schweißrolleneinrichtung (18) zum Erzeugen einer Luftpolsterfolie (12) aus zwei aufeinanderliegenden Folienbahnen (14', 14") im Durchlaufbetrieb, wobei die Schweißrolleneinrichtung (18) eine Innenwelle (40), eine um die Innenwelle (40) angeordnete Außenwelle (42) und eine Heizeinrichtung (44) zum Beheizen der Innenwelle (40) aufweist, wobei die Außenwelle (42) und die Innenwelle (40) eine gemeinsame Längsachse (46) aufweisen, wobei sich die Längsachse (46) in einer Längsrichtung erstreckt, wobei die Innenwelle (40) feststehend angeordnet ist, wobei die Außenwelle (42) um die Längsachse (46) in einer Drehrichtung drehbar gelagert ist, wobei die Außenwelle (42) eine Mehrzahl von äußeren Stegen (48) aufweist, die sich bezüglich der Längsachse (46) in einer radialen Richtung nach außen hin erstrecken, wobei die äußeren Stege (48) in der Längsrichtung voneinander beabstandet sind, wobei die Außenwelle (42) zwischen jeweils zwei benachbarten, äußeren Stegen (48) jeweils eine äußere Aussparung (50) aufweist, und wobei die Innenwelle (40) derart ausgebildet ist, dass ein Wärmetransfer zwischen der Innenwelle (40) und der Außenwelle (42) in einem Bereich der äußeren Stege (48) größer ist als in einem Bereich der äußeren Aussparungen (50).

2. Schweißrolleneinrichtung nach Anspruch 1, wobei ein radialer Abstand (76, 78) zwischen der Innenwelle (40) und der Außenwelle (42) in dem Bereich der äußeren Stege (48) kleiner ist als in dem Bereich der äußeren Aussparungen (50).

3. Schweißrolleneinrichtung nach Anspruch 1 oder 2, wobei die Innenwelle eine Mehrzahl von inneren Stegen (54) aufweist, die sich bezüglich der Längsachse (46) in der radialen Richtung in Richtung der Außenwelle (42) hin erstrecken, wobei die inneren Stege (54) in der Längsrichtung voneinander beabstandet sind, und wobei die inneren Stege (54) in der Längsrichtung derart angeordnet sind, dass jeweils ein innerer Steg (54) korrespondierend, insbesondere radial fluchtend, zu jeweils einem äußeren Steg (48) angeordnet ist.

4. Schweißrolleneinrichtung nach Anspruch 3, wobei die Innenwelle (40) zwischen jeweils zwei benachbarten, inneren Stegen (54) jeweils eine innere Aussparung (56) aufweist, wobei ein radialer Abstand (76) der inneren Stege (54) zu der Au-βenwelle (42) kleiner ist als ein radialer Abstand (78) der inneren Aussparungen (56) zu der Außenwelle (42).

5. Schweißrolleneinrichtung nach Anspruch 4, wobei der radialer Abstand (76) der inneren Stege (54) zu der Außenwelle (42) kleiner ist als 0,5 µm, wobei der radiale Abstand (76) vorzugsweise 0,05 µm bis 0,5 µm, insbesondere 0,1 µm beträgt.

6. Schweißrolleneinrichtung nach Anspruch 4 oder 5, wobei der radialer Abstand (78) der inneren Aussparungen (56), insbesondere eines Bodens der inneren Aussparungen (56), zu der Außenwelle (42) größer ist als 0,5 mm, vorzugsweise 0,5 mm bis 1 cm, insbesondere 3 mm.

7. Schweißrolleneinrichtung nach einem der Ansprüche 1 bis 6, wobei sich jeder äußere Steg (48) nach radial außen hin verjüngt.

8. Schweißrolleneinrichtung nach Anspruch 7, wobei jeder äußere Steg (48) einen ersten Bereich mit einer ersten Erstreckung in der Längsrichtung und einen zweiten Bereich mit einer zweiten Erstreckung in der Längsrichtung aufweist, wobei der zweite Bereich radial weiter außen von dem ersten Bereich angeordnet ist, und wobei die zweite Erstreckung kleiner ist als die erste Erstreckung.

9. Schweißrolleneinrichtung nach einem der Ansprüche 1 bis 8, wobei die äußeren Stege (48) in der Längsrichtung aufeinanderfolgend mit demselben Versatz (64) angeordnet sind, wobei ein Versatz (48) benachbarter Stege (48) 0,1 cm bis 3 cm, insbesondere 0,8 cm, beträgt.

10. Schweißrolleneinrichtung nach einem der Ansprüche 1 bis 9, wobei die äußeren Stege (48) an einem radial äußeren Ende in der Längsrichtung jeweils eine Erstreckung (66) aufweisen, die 0,5 mm bis 1 cm, insbesondere 3 mm, beträgt.

11. Schweißrolleneinrichtung nach einem der Ansprüche 1 bis 10, wobei die Schweißrolleneinrichtung (18) des Weiteren zwei Lagerungseinrichtungen (60', 60") zum Lagern der Außenwelle (42) auf der Innenwelle (40) aufweist, insbesondere wobei die Lagerungseinrichtungen (60', 60") jeweils an einem axialen Ende der Außenwelle (42) angeordnet sind, und wobei sich die Innenwelle (40) in der Längsrichtung mindestens jeweils bis zu dem axialen Ende der Außenwelle (42) hin erstreckt.

12. Schweißrolleneinrichtung nach einem der Ansprüche 1 bis 11, wobei die Außenwelle (42) zwei äußerste Aussparungen (52', 52") aufweist, die bezüglich der Längsrichtung auf gegenüberliegenden Seiten der äußeren Stege (48) der Au-βenwelle (42) angeordnet sind, wobei sich die äußersten Aussparungen (52', 52") der Außenwelle (42) in der Längsrichtung von den äußeren Stegen (48) weg erstrecken.

13. Schweißrolleneinrichtung nach einem der Ansprüche 1 bis 11, wobei die Innenwelle (40) zwei äußerste Aussparungen (58', 58") aufweist, die bezüglich der Längsrichtung auf gegenüberliegenden Seiten der inneren Stege (54) der Innenwelle (40) angeordnet sind, wobei sich die äußersten Aussparungen (58', 58") der Innenwelle (40) in der Längsrichtung von den inneren Stegen (54) weg erstrecken.

14. System (10, 10', 120) zum Erzeugen einer Luftpolsterfolie (12) aus zwei aufeinanderliegenden Folienbahnen (14', 14") im Durchlaufbetrieb, in dem die beiden Folienbahnen (14', 14") in einer Transportrichtung (16) bewegt werden, wobei das System eine Schweißrolleneinrichtung (18) gemäß einem der Ansprüche 1 bis 13 und eine Düseneinrichtung (20) zum Erzeugen eines Luftstroms zwischen den Folienbahnen (14', 14") in der Transportrichtung (16) aufweist, wobei die Längsachse (46) senkrecht zu der Transportrichtung (16) angeordnet ist, und wobei die Düseneinrichtung (20) zwischen den Folienbahnen (14', 14") angeordnet ist.

15. Verfahren (100) zum Erzeugen einer Luftpolsterfolie (12) aus zwei aufeinanderliegenden Folienbahnen (14', 14") im Durchlaufbetrieb, in dem die beiden Folienbahnen (14', 14") in einer Transportrichtung (16) bewegt werden, wobei das Verfahren die folgenden Schritte aufweist:
- Anordnen (102) zweier Schweißrolleneinrichtungen (18', 18") auf zwei gegenüberliegenden Seiten der Folienbahnen (14', 14"), so dass die Folienbahnen (14', 14") zwischen den Schweißrolleneinrichtungen (18', 18") hindurchlaufen, wobei jede Schweißrolleneinrichtung (18', 18") eine Innenwelle (40), eine um die Innenwelle (40) angeordnete Außenwelle (42) und eine Heizeinrichtung (44) zum Beheizen der Innenwelle (40) aufweist, wobei die Außenwelle (42) und die Innenwelle (40) eine gemeinsame Längsachse (46) aufweisen, wobei sich die Längsachse (46) in einer Längsrichtung erstreckt, wobei die Innenwelle (40) feststehend angeordnet ist, wobei die Außenwelle (42) um die Längsachse (46) in einer Drehrichtung drehbar gelagert ist, wobei die Außenwelle (42) eine Mehrzahl von äußeren Stegen (48) aufweist, die sich bezüglich der Längsachse (46) in einer radialen Richtung nach außen hin erstrecken, wobei die äußeren Stege (48) in der Längsrichtung voneinander beabstandet sind, wobei die Außenwelle (42) zwischen jeweils zwei benachbarten, äußeren Stegen (48) jeweils eine äußere Aussparung (50) aufweist, und wobei die Innenwelle (40) derart ausgebildet ist, dass ein Wärmetransfer zwischen der Innenwelle (40) und der Außenwelle (42) in einem Bereich der äußeren Stege (48) größer ist als in einem Bereich der äußeren Aussparungen (50), wobei die Längsachsen (46) der beiden Innenwellen (40) der Schweißrolleneinrichtungen (18', 18") parallel zueinander und senkrecht zu der Transportrichtung (16) angeordnet sind, wobei die äußeren Stege (48) der Schweißrolleneinrichtungen (18', 18" in der Längsrichtung korrespondierend zueinander angeordnet sind, so dass je zwei äußeren Stege (48) und je zwei äußere Aussparungen(50) gegenüberliegend zueinander angeordnet sind;
- Anordnen (106) einer Düseneinrichtung (20) zwischen den Folienbahnen (14', 14"), insbesondere wobei die Düseneinrichtung (20) eine Mehrzahl von Düsen (22) aufweist und die Düsen (22) entlang der Längsrichtung angeordnet werden, so dass jeweils eine Düse (22) in der Transportrichtung (16) korrespondierend, insbesondere fluchtend, mit je zwei gegenüberliegenden äußeren Aussparungen (50) der Schweißrolleneinrichtungen (18', 18") angeordnet ist;
- Erzeugen (112) eines Luftstroms mittels der Düseneinrichtung (20) zwischen den Folienbahnen (14', 14") in der Transportrichtung (16); und
- Verschweißen (114) der Folienbahnen (14', 14") mittels der Schweißrolleneinrichtungen (18', 18") in der Transportrichtung (16) nur in dem Bereich der äußeren Stege (48), so dass Schweißnähte in der Transportrichtung (16) erzeugt werden und zwischen den Schweißnähten Folienschläuche ausgebildet werden, die sich in der Transportrichtung (16) erstrecken.

## Claims

1. A welding roller device (18) for producing an air cushion film (12) from two film webs (14', 14") lying one on top of the other in continuous operation, wherein the sealing roller device (18) comprises an inner shaft (40), an outer shaft (42) arranged around the inner shaft (40) and a heating device (44) for heating the inner shaft (40), wherein the outer shaft (42) and the inner shaft (40) comprise a common longitudinal axis (46), the longitudinal axis (46) extending in a longitudinal direction, wherein the inner shaft (40) is fixedly arranged, wherein the outer shaft (42) is mounted for rotation about the longitudinal axis (46) in a rotational direction wherein the outer shaft (42) comprises a plurality of outer webs (48) extending outwardly in a radial direction with respect to the longitudinal axis (46), wherein the outer webs (48) are spaced apart from each other in the longitudinal direction, wherein the outer shaft (42) has a respective outer recess (50) between each two adjacent outer webs (48), and wherein the inner shaft (40) is configured such that a heat transfer between the inner shaft (40) and the outer shaft (42) is greater in an area of the outer webs (48) than in an area of the outer recesses (50).

2. The welding roller device according to claim 1, wherein a radial distance (76, 78) between the inner shaft (40) and the outer shaft (42) is smaller in the area of the outer webs (48) than in the area of the outer recesses (50).

3. The welding roller device according to claim 1 or 2, wherein the inner shaft comprises a plurality of inner webs (54) which extend with respect to the longitudinal axis (46) in the radial direction towards the outer shaft (42), wherein the inner webs (54) are spaced apart from one another in the longitudinal direction, and wherein the inner webs (54) are arranged in the longitudinal direction such that in each case one inner web (54) is arranged correspondingly, in particular radially aligned, to in each case one outer web (48).

4. The welding roller device according to claim 3, wherein the inner shaft (40) comprises an inner recess (56) between each two adjacent inner webs (54), wherein a radial distance (76) of the inner webs (54) from the outer shaft (42) is smaller than a radial distance (78) of the inner recesses (56) from the outer shaft (42).

5. The welding roller device according to claim 4, wherein the radial distance (76) of the inner webs (54) to the outer shaft (42) is smaller than 0.5 µm, wherein the radial distance (76) is preferably 0.05 µm to 0.5 µm, in particular 0.1 µm.

6. The welding roller device according to claim 4 or 5, wherein the radial distance (78) of the inner recesses (56), in particular of a bottom of the inner recesses (56), to the outer shaft (42) is greater than 0.5 mm, preferably 0.5 mm to 1 cm, in particular 3 mm.

7. The welding roller device according to any of claims 1 to 6, wherein each outer web (48) tapers radially outward.

8. The welding roller device according to claim 7, wherein each outer web (48) comprises a first area having a first extension in the longitudinal direction and a second area having a second extension in the longitudinal direction, wherein the second area is arranged radially further outwardly from the first area, and wherein the second extension is smaller than the first extension.

9. The welding roller device according to any one of claims 1 to 8, wherein the outer webs (48) are arranged successively in the longitudinal direction with the same offset (64), wherein an offset (48) of adjacent webs (48) is 0.1 cm to 3 cm, in particular 0.8 cm.

10. The welding roller device according to one of the claims 1 to 9, wherein the outer webs (48) at a radially outer end each comprise an extension (66) in the longitudinal direction which is 0.5 mm to 1 cm, in particular 3 mm.

11. The welding roller device according to one of claims 1 to 10, wherein the welding roller device (18) furthermore comprises two bearing devices (60', 60") for bearing the outer shaft (42) on the inner shaft (40), in particular wherein the bearing devices (60', 60") are each arranged at an axial end of the outer shaft (42), and wherein the inner shaft (40) extends in the longitudinal direction at least as far as the axial end of the outer shaft (42) in each case.

12. The welding roller device according to any one of claims 1 to 11, wherein the outer shaft (42) comprises two outermost recesses (52', 52") arranged on opposite sides of the outer webs (48) of the outer shaft (42) with respect to the longitudinal direction, wherein the outermost recesses (52', 52") of the outer shaft (42) extend in the longitudinal direction away from the outer webs (48).

13. The welding roller device according to any one of claims 1 to 11, wherein the inner shaft (40) comprises two outermost recesses (58', 58") arranged on opposite sides of the inner webs (54) of the inner shaft (40) with respect to the longitudinal direction, wherein the outermost recesses (58', 58") of the inner shaft (40) extend in the longitudinal direction away from the inner webs (54).

14. A system (10, 10', 120) for producing an air cushion film (12) from two film webs (14', 14") lying on top of each other in continuous operation, in which the two film webs (14', 14") are moved in a transport direction (16), wherein the system comprises a sealing roller means (18) according to any one of claims 1 to 13 and a nozzle device (20) for generating an air flow between the film webs (14', 14") in the transport direction (16), wherein the longitudinal axis (46) is arranged perpendicular to the transport direction (16), and wherein the nozzle device (20) is arranged between the film webs (14', 14").

15. A method (100) for producing an air cushion film (12) from two film webs (14', 14") lying one on top of the other in continuous operation, in which the two film webs (14', 14") are moved in a transport direction (16), wherein the method comprises the following steps:
- arranging (102) two sealing roller means (18', 18") on two opposite sides of the film webs (14', 14") so that the film webs (14', 14") pass between the sealing roller means (18', 18"), wherein each sealing roller means (18', 18") comprises an inner shaft (40), an outer shaft (42) arranged around the inner shaft (40), and a heating device (44) for heating the inner shaft (40), wherein the outer shaft (42) and the inner shaft (40) comprise a common longitudinal axis (46), the longitudinal axis (46) extending in a longitudinal direction, wherein the inner shaft (40) is fixedly mounted, wherein the outer shaft (42) is rotatably mounted about the longitudinal axis (46) in a rotational direction, wherein the outer shaft (42) comprises a plurality of outer webs (48) extending outwardly with respect to the longitudinal axis (46) in a radial direction wherein the outer webs (48) are spaced apart in the longitudinal direction, wherein the outer shaft (42) comprises an outer recess (50) between each two adjacent outer webs (48), and wherein the inner shaft (40) is configured such that a heat transfer between the inner shaft (40) and the outer shaft (42) is greater in an area of the outer webs (48) than in an area of the outer recesses (50), wherein the longitudinal axes (46) of the two inner shafts (40) of the welding roller devices (18', 18") are arranged parallel to each other and perpendicular to the transport direction (16), wherein the outer webs (48) of the welding roller devices (18', 18") are arranged corresponding to each other in the longitudinal direction, so that each two outer webs (48) and each two outer recesses (50) are arranged opposite to each other;
- arranging (106) a nozzle device (20) between the film webs (14', 14"), in particular wherein the nozzle device (20) comprises a plurality of nozzles (22) and the nozzles (22) are arranged along the longitudinal direction, so that in each case one nozzle (22) is arranged in the transport direction (16) corresponding, in particular in alignment, with in each case two opposite outer recesses (50) of the sealing roller devices (18', 18");
- generating (112) an air flow by means of the nozzle means (20) between the film webs (14', 14") in the transport direction (16); and
- welding (114) the film webs (14', 14") by means of the welding roller means (18', 18") in the transport direction (16) only in the area of the outer webs (48), so that weld seams are produced in the transport direction (16) and film tubes are configured between the weld seams, which extend in the transport direction (16).

## Revendications

1. Dispositif à rouleau de soudage (18) pour la production d'un film à bulles d'air (12) à partir de deux bandes de film (14', 14") superposées en fonctionnement continu, le dispositif à rouleau de soudage (18) présentant un arbre intérieur (40), un arbre extérieur (42) agencé autour de l'arbre intérieur (40) et un dispositif de chauffage (44) pour chauffer l'arbre intérieur (40), l'arbre extérieur (42) et l'arbre intérieur (40) présentant un axe longitudinal commun (46), l'axe longitudinal (46) s'étendant dans une direction longitudinale, l'arbre intérieur (40) étant agencé de manière fixe, l'arbre extérieur (42) étant monté de manière rotative autour de l'axe longitudinal (46) dans une direction de rotation, l'arbre extérieur (42) présentant une pluralité de nervures extérieures (48) qui s'étendent vers l'extérieur par rapport à l'axe longitudinal (46) dans une direction radiale, les nervures extérieures (48) étant espacées les unes des autres dans la direction longitudinale, l'arbre extérieur (42) présentant respectivement un évidement extérieur (50) entre deux nervures extérieures voisines respectives (48), et l'arbre intérieur (40) étant configuré de telle sorte qu'un transfert de chaleur entre l'arbre intérieur (40) et l'arbre extérieur (42) est plus important dans une zone des nervures extérieures (48) que dans une zone des évidements extérieurs (50).

2. Dispositif à rouleau de soudage selon la revendication 1, dans lequel une distance radiale (76, 78) entre l'arbre intérieur (40) et l'arbre extérieur (42) est plus petite dans la zone des nervures extérieures (48) que dans la zone des évidements extérieurs (50).

3. Dispositif à rouleau de soudage selon la revendication 1 ou 2, dans lequel l'arbre intérieur présente une pluralité de nervures intérieures (54) qui s'étendent par rapport à l'axe longitudinal (46) dans la direction radiale en direction de l'arbre extérieur (42), les nervures intérieures (54) étant espacées les unes des autres dans la direction longitudinale, et les nervures intérieures (54) étant agencées dans la direction longitudinale de telle sorte qu'une nervure intérieure (54) est agencée respectivement en correspondance, notamment en alignement radial, avec une nervure extérieure respective (48).

4. Dispositif à rouleau de soudage selon la revendication 3, dans lequel l'arbre intérieur (40) présente respectivement un évidement intérieur (56) entre deux nervures intérieures voisines respectives (54), une distance radiale (76) des nervures intérieures (54) à l'arbre extérieur (42) étant inférieure à la distance radiale (78) des évidements intérieurs (56) à l'arbre extérieur (42).

5. Dispositif à rouleau de soudage selon la revendication 4, dans lequel la distance radiale (76) des nervures intérieures (54) à l'arbre extérieur (42) est inférieure à 0,5 µm, la distance radiale (76) étant de préférence de 0,05 µm à 0,5 µm, notamment 0,1 µm.

6. Dispositif à rouleau de soudage selon la revendication 4 ou 5, dans lequel la distance radiale (78) des évidements intérieurs (56), notamment d'un fond des évidements intérieurs (56), à l'arbre extérieur (42) est supérieure à 0,5 mm, de préférence de 0,5 mm à 1 cm, notamment 3 mm.

7. Dispositif à rouleau de soudage selon l'une quelconque des revendications 1 à 6, dans lequel chaque nervure extérieure (48) se rétrécit radialement vers l'extérieur.

8. Dispositif à rouleau de soudage selon la revendication 7, dans lequel chaque nervure extérieure (48) présente une première zone ayant une première étendue dans la direction longitudinale et une deuxième zone ayant une deuxième étendue dans la direction longitudinale, la deuxième zone étant agencée radialement plus à l'extérieur de la première zone, et dans lequel la deuxième étendue est inférieure à la première étendue.

9. Dispositif à rouleau de soudage selon l'une quelconque des revendications 1 à 8, dans lequel les nervures extérieures (48) sont agencées successivement dans la direction longitudinale avec le même décalage (64), un décalage (48) de nervures voisines (48) étant de 0,1 cm à 3 cm, notamment 0,8 cm.

10. Dispositif à rouleau de soudage selon l'une quelconque des revendications 1 à 9, dans lequel les nervures extérieures (48) présentent respectivement, à une extrémité radialement extérieure dans la direction longitudinale, une étendue (66) qui est de 0,5 mm à 1 cm, notamment 3 mm.

11. Dispositif à rouleau de soudage selon l'une quelconque des revendications 1 à 10, dans lequel le dispositif à rouleau de soudage (18) présente en outre deux dispositifs de support (60', 60") pour supporter l'arbre extérieur (42) sur l'arbre intérieur (40), notamment dans lequel les dispositifs de support (60 à 60") sont agencés respectivement à une extrémité axiale de l'arbre extérieur (42), et dans lequel l'arbre intérieur (40) s'étend dans la direction longitudinale au moins respectivement jusqu'à l'extrémité axiale de l'arbre extérieur (42).

12. Dispositif à rouleau de soudage selon l'une quelconque des revendications 1 à 11, dans lequel l'arbre extérieur (42) présente deux évidements les plus extérieurs (52', 52"), qui sont agencés sur des côtés opposés des nervures extérieures (48) de l'arbre extérieur (42) par rapport à la direction longitudinale, les évidements les plus extérieurs (52', 52") de l'arbre extérieur (42) s'étendant dans la direction longitudinale en s'éloignant des nervures extérieures (48).

13. Dispositif à rouleau de soudage selon l'une quelconque des revendications 1 à 11, dans lequel l'arbre intérieur (40) présente deux évidements les plus extérieurs (58', 58"), qui sont agencés sur des côtés opposés des nervures intérieures (54) de l'arbre intérieur (40) par rapport à la direction longitudinale, les évidements les plus extérieurs (58', 58") de l'arbre intérieur (40) s'étendant dans la direction longitudinale en s'éloignant des nervures intérieures (54).

14. Système (10, 10', 120) pour la production d'un film à bulles d'air (12) à partir de deux bandes de film (14", 14") superposées en fonctionnement continu, dans lequel les deux bandes de film (14', 14") sont déplacées dans une direction de transport (16), le système présentant un dispositif à rouleau de soudage (18) selon l'une quelconque des revendications 1 à 13 et un dispositif à buses (20) pour produire un courant d'air entre les bandes de film (14', 14") dans la direction de transport (16), l'axe longitudinal (46) étant agencé perpendiculairement à la direction de transport (16), et le dispositif à buses (20) étant agencé entre les bandes de film (14', 14").

15. Procédé (100) de production d'un film à bulles d'air (12) à partir de deux bandes de film (14', 14") superposées en fonctionnement continu, dans lequel les deux bandes de film (14', 14") sont déplacées dans une direction de transport (16), le procédé présentant les étapes suivantes :
- l'agencement (102) de deux dispositifs de rouleau de soudage (18', 18") sur deux côtés opposés des bandes de film (14', 14"), de telle sorte que les bandes de film (14', 14") passent entre les dispositifs de rouleau de soudage (18', 18"), chaque dispositif à rouleau de soudage (18', 18") présentant un arbre intérieur (40), un arbre extérieur (42) agencé autour de l'arbre intérieur (40) et un dispositif de chauffage (44) pour chauffer l'arbre intérieur (40), l'arbre extérieur (42) et l'arbre intérieur (40) présentant un axe longitudinal commun (46), l'axe longitudinal (46) s'étendant dans une direction longitudinale, l'arbre intérieur (40) étant agencé de manière fixe, l'arbre extérieur (42) étant monté de manière rotative autour de l'axe longitudinal (46) dans une direction de rotation, l'arbre extérieur (42) présentant une pluralité de nervures extérieures (48) qui s'étendent vers l'extérieur par rapport à l'axe longitudinal (46) dans une direction radiale, les nervures extérieures (48) étant espacées les unes des autres dans la direction longitudinale, l'arbre extérieur (42) présentant respectivement un évidement extérieur (50) entre deux nervures extérieures voisines respectives (48), et l'arbre intérieur (40) étant configuré de telle sorte qu'un transfert de chaleur entre l'arbre intérieur (40) et l'arbre extérieur (42) est plus important dans une zone des nervures extérieures (48) que dans une zone des évidements extérieurs (50), les axes longitudinaux (46) des deux arbres intérieurs (40) des dispositifs de rouleau de soudage (18', 18") étant agencés parallèlement l'un à l'autre et perpendiculairement à la direction de transport (16), les nervures extérieures (48) des dispositifs de rouleau de soudage (18', 18") étant agencées en correspondance l'une avec l'autre dans la direction longitudinale, de telle sorte que deux nervures extérieures (48) et deux évidements extérieurs (50) sont agencés en face l'un de l'autre ;
- l'agencement (106) d'un dispositif à buses (20) entre les bandes de film (14', 14"), le dispositif à buses (20) présentant notamment une pluralité de buses (22) et les buses (22) étant agencées le long de la direction longitudinale, de telle sorte qu'une buse (22) est agencée respectivement dans la direction de transport (16) en correspondance, notamment en alignement, avec deux évidements extérieurs (50) opposés des dispositifs de rouleau de soudage (18', 18") ;
- la production (112) d'un courant d'air au moyen du dispositif à buses (20) entre les bandes de film (14', 14") dans la direction de transport (16) ; et
- le soudage (114) des bandes de film (14', 14") au moyen des dispositifs de rouleau de soudage (18', 18") dans la direction de transport (16) uniquement dans la zone des nervures extérieures (48), de telle sorte que des cordons de soudure sont produits dans la direction de transport (16) et des tubes de film sont formés entre les cordons de soudure, lesquels s'étendent dans la direction de transport (16).
